(19) Europäisches Patentamt
European Patent Office
Office européen des brevets

(11) **EP 0 980 177 A2**

(12) **EUROPEAN PATENT APPLICATION**

(43) Date of publication:
**16.02.2000 Bulletin 2000/07**

(51) Int Cl.⁷: **H04M 3/50**, G06F 17/30

(21) Application number: **99306384.1**

(22) Date of filing: **13.08.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(30) Priority: **13.08.1998 JP 22915998**<br>**09.02.1999 JP 3205499**<br><br>(71) Applicants:<br>• **ASCII CORPORATION**<br>**Tokyo (JP)** | • **Murayama, Kyohei John**<br>**Sennan-gun, Osaka (JP)**<br><br>(72) Inventor: **Murayama, Kyohei John**<br>**Kumatori-cho Sennan-gun Osaka (JP)**<br><br>(74) Representative: **Waldren, Robin Michael**<br>**MARKS & CLERK,**<br>**57-60 Lincoln's Inn Fields**<br>**London WC2A 3LS (GB)** |

(54) **Contents registration apparatus and method**

(57)    The invention is related to a contents registration apparatus. The contents registration apparatus of the invention comprises; a storage section (20) for storing a file which can be processed by a browser, a modem (30) for connecting to a public telephone line, and a content registration section (11 or 212 or 213 or 214) which acquires via the modem, data that is sent from a telephone or a facsimile via a public telephone line, converts this into a file which can be processed by a program and stores this in the storage section.

# FIG. 1

1:CONTENTS REGISTRATION APPARATUS
10:PROCESSING SECTION
CONTENT REGISTRATION SECTION
STORAGE SECTION — 20
MODEM — 30
COMMUNICATION BOARD — 40
PUBLIC TELEPHONE LINE
LAN OR INTERNET (INCLUDING DIAL UP CONNECTION)
11  50

Description

## BACKGROUND OF THE INVENTION

### Field of the Invention

The present invention relates to a contents registration apparatus which uses a voice or image sent from a telephone or a facsimile via a public telephone line, to perform registration or updating of the contents on a homepage (web page).

This application is based on patent application No. Hei 10-229159 and Hei. 11-032054 filed in Japan, the contents of which are incorporated herein by reference.

### Description of the Related Art

In recent years, the Internet has become widely popular, and has come to be used by many people. Moreover, many individuals and shops have opened their own homepages for disseminating information.

The individual or the shop which opens the homepage endeavors to update this with timely information in order to increase the appeal of the homepage. Therefore, as occasion demands, it is necessary to update the voice or images constituting the contents of the homepage.

In order to update the voice file or image file which is the substance of the voice or images on the homepage, it is at least necessary to have a computer which can access a provider which performs a connection service, and which is equipped with a device for inputting a voice recording or an image. To update the contents on the homepage, the following is normally carried in sequence:

1) A voice or image is input using a computer with software for inputting voice such as a voice recorder. This is then made into a file format which can be processed by a browser, and saved.
2) The homepage onto which the saved file is to be pasted is then edited, and saved in HTML (Hyper Text Markup Language) format.
3) The saved voice file or image file is then sent to the owners directory on the WWW (World Wide Web) server (referred to hereunder as the web server) using the edited HTML file together with FTP (file transfer protocol).

As mentioned above, even an individual or a small shop (husband and wife shop) which opens a homepage, updates this with timely information in order to increase the appeal of their homepage. There is therefore a growing requirement to be able to update the voice file or image file of the homepage at an appropriate timing no matter when.

With the abovementioned voice file and image file updating method, the file volume of the voice file or image file to be updated generally become fairly large. There is therefore the problem that the forwarding time for the voice file or image file by FTP is longer than the recording time or image input time.

Furthermore, in order to update the voice file or image file, a computer having a communication facility is required. Consequently a voice or image linked to a homepage cannot be updated from a place where there is no computer. In recent years, mobile computers, that is, portable personal computers, have come onto the market, and Internet access can also be performed using these. A mobile computer however cannot be conveniently used outdoors where there is no power supply. Therefore at present it is difficult to update a voice or image on a homepage from places other than those where there is a computer fully equipped with a communication facility.

Moreover, a person wishing to perform contents updating by the abovementioned contents updating method must have knowledge of FTP or the like. There is thus the problem that time is required for training the person who is to update the contents, up to a level where they can use this method.

## SUMMARY OF THE INVENTION

Therefore, one object of the present invention is to provide a contents registration apparatus which can easily register or update a voice file or an image file being the substance of the contents on a homepage.

According to the invention, the above object is achieved by a contents registration apparatus comprising; a storage section for storing a file which can be processed by a browser, a modem for connecting to a public telephone line, and a content registration section which acquires via the modem, data that is sent from a telephone or a facsimile via a public telephone line, converts the data into a file which can be processed by a program, and stores the file in the storage section.

In this way, a file (voice file, image file or text file) which becomes the substance of the contents on a homepage can be updated using a readily available telephone or facsimile. Therefore, it becomes possible to perform updating of the contents, irrespective of location. In particular, in the case where the contents are updated using a portable telephone, the degree of freedom for the location where the contents can be updated is greatly increased.

Furthermore, with the contents registration apparatus of the present invention, contents updating can be carried out without knowledge of FTP or voice recorders, as long as one knows how to use a telephone or facsimile.

That is to say, the present invention provides a contents registration apparatus comprising; a storage section for storing data related to voice or images, a modem provided with a function for digitally outputting signals other than signals related to communication protocol, and a content registration section which acquires as digital data via the modem, voice or images sent from a telephone or a facsimile via a public telephone line, converts the acquired digital data into a content file which can be processed by a browser, and stores the file in the storage section.

In this way, a voice file or an image file which become the substance of the contents on a homepage can be updated by using a readily available telephone or facsimile.

Moreover, the present invention provides a contents registration apparatus comprising; a storage section for storing a file which can be processed by a browser, a modem for connection to a public telephone line, a DTMF identifying section for detecting and identifying a DTMF signal, and a text registration section which acquires as text data via the modem and the DTMF identifying section, DTMF signals sent via a public telephone line, converts the acquired text data into a file which can be processed by a program, and stores the file in the storage section.

Here, for the format of "a file which can be processed by a program", there is for example the text format file or the binary format file. Moreover for the program, at present there is the CGI (Common Gateway Interface) application program for the case of processing in the contents registration apparatus, while in the case of processing using another computer, there is the Java applet or plug-in software.

In this way, the text file that becomes the resource for the contents on a homepage can be updated using a readily available telephone.

Furthermore, the present invention provides a contents registration apparatus comprising: a storage section for storing a content file which can be processed by a browser, a communication section for connection to a network, and an electronic mail registration section which in the case where there is arrival of new electronic mail via the network, decodes the files attached to the electronic mail, and stores the decoded file in the storage section.

In this way, the voice file or image file which become the substance of the contents on a homepage can be updated using electronic mail.

Moreover, the present invention provides a contents registration apparatus comprising; a storage section for storing voice or text data, a DTMF identifying section for detecting and identifying DTMF signals, a registration section which acquires voice or text data sent via a public telephone line, individually adds specific information to the acquired voice or text data, and stores this in the storage section, a judgment section for judging instruction contents sent using a DTMF signal sent via a public telephone line, and a playback section which, in the case where the judgment result by the judgment section is for playback of a specific voice or text data, plays back the specified voice or plays back the specified text data using speech synthesis, and outputs this to a public telephone line.

In this way, the person who has registered the voice content or text content can confirm the registered contents.

Moreover, the present invention provides a contents registration apparatus comprising; a storage section for storing an image file and a file with the image file as the contents, a modem for connecting to a public telephone line, a content registration section which acquires as digital data via the modem, images sent from a facsimile via a public telephone line, and stores the acquired digital data as an image file in the storage section, and an image transmission section which transmits to a facsimile via a public telephone line the image of the file for which the registered image file has been made the contents.

In this way, with the file for which the image content has been registered, not only the registered image can be confirmed, but also the browser displayed image of the HTML file including these contents can be confirmed.

Furthermore, with the abovementioned respective contents registration apparatus, the storage section contains direct or indirect link information for each file, and further stores a log file which can be processed by the browser, and the contents registration apparatus is further provided with a log creation section which, in the case where a file is stored in the storage section, executes updating of the log file so as to have a direct or indirect link with the file.

By means of this, a person who accesses the contents registration apparatus is able to easily gain access to a registered or updated content file, by perusing this log file.

Moreover, the contents registration apparatus is further provided with a call setting section for performing telephone-line connection to the telephone or facsimile sending the data, and the content registration section acquires via the modem the data sent from the telephone or facsimile connected to the telephone-line by the call setting section.

Consequently, the contents inside the contents registration apparatus can always maintain the latest information. As a result, a person perusing the contents in the contents registration apparatus will always have access to the latest information.

Moreover, the above respective contents registration apparatus is further provided with; a processing section for processing the files stored in the storage section, or a processing section which provides a program for processing by another computer, the files stored in the storage section.

A processing section for processing files stored in the storage section is at present realized by executing a CGI application program. On the other hand, a program for processing by another computer the files stored in a storage section is at present, a Java applet or plug-in software.

Moreover, the present invention provides a method and computer program product which performs the operation of the abovementioned contents registration apparatus, on a computer.

This summary of the invention does not enumerate all the necessary characteristics. Accordingly, sub-combinations of the above characteristic groups can also be the invention.

Furthermore, the reference numerals in the claims have no influence on the interpretation of the claims.

## BRIEF DESCRIPTION OF THE DRAWINGS

FIG. 1 is a diagram showing a structural example of a contents registration apparatus according to a first embodiment.

FIG. 2 is a diagram showing an example of storage contents of a storage section in the first embodiment.

FIG. 3 is a flow chart showing the operation of the contents registration apparatus of FIG. 1.

FIG. 4 is a diagram showing a structural example of a contents registration apparatus according to a second embodiment.

FIG. 5 is a diagram showing an example of storage contents of a storage section in the second embodiment.

FIG. 6 is a flow chart showing the operation of the contents registration apparatus of FIG. 4.

FIG. 7 is a diagram showing an example of storage contents of a storage section in a third embodiment.

FIG. 8 is a flow chart showing the operation of a contents registration apparatus in the third embodiment.

FIG. 9 is a diagram showing a display example of a main homepage.

FIG. 10 is a diagram showing a display example of a homepage related to a group of contents.

FIG. 11 is a diagram showing a display example of a homepage related to individual contents inside the group.

FIG. 12 is a diagram showing a structural example of a contents registration apparatus according to a fourth embodiment of the present invention.

FIG. 13 is a flow chart showing the operation of the contents registration apparatus of FIG. 12.

FIG. 14 is a diagram showing a structural example of a contents registration apparatus according to a fifth embodiment of the present invention.

FIG. 15 is a flow chart showing the operation of the contents registration apparatus of FIG. 14.

FIG. 16 is a diagram showing a structural example of a contents registration apparatus according to a sixth embodiment of the present invention.

FIG. 17 is a diagram showing an example of the storage contents of a storage section in the sixth embodiment.

FIG. 18 is a flow chart showing an outline of the operation of the contents registration apparatus.

FIG. 19 is a flow chart showing the operation of a contents operation section.

FIG. 20 is a diagram showing a data structure example of table. dat (222) of FIG. 17.

FIG. 21 is a flow chart showing the operation of a voice registration section.

FIG. 22 is a flow chart showing the operation of a text registration section.

FIG. 23 is a diagram showing a screen display example based on an HTML file including an applet which uses a text file.

FIG. 24 is a flow chart showing the operation of contents registration confirmation in a voice registration section and a text registration section.

FIG. 25 is a flow chart showing the operation of an image registration section.

FIG. 26 is a diagram showing a display example of an HTML file containing a link information to an image content.

FIG. 27 is a flow chart showing the operation of an electronic mail registration section.

FIG. 28 is a flow chart showing the operation of a log creation section.

FIG. 29 is a diagram showing a data structure example of log. dat (223) of FIG. 17.

FIG. 30 is a flow chart showing the operation of a push processing section.

FIG. 31 is a diagram showing a data structure example of push. dat (224) of FIG. 17.

## DESCRIPTION OF THE PREFERRED EMBODIMENTS

The following embodiments do not limit the invention according to the claims. Moreover, all combination of the characteristics that are explained in the embodiments are not necessarily required to achieve the objects.

As follows is a description of contents registration apparatus and contents registration methods according to embodiments of the present invention, with reference to the figures.

(First embodiment)

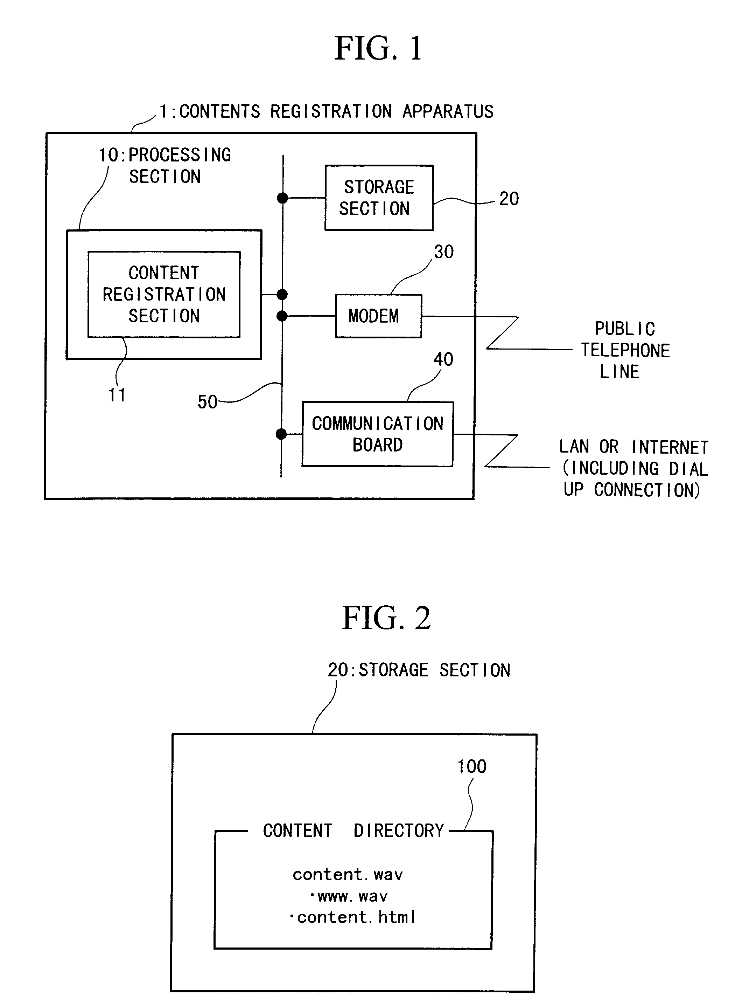

FIG. 1 is a diagram showing a structural example of a contents registration apparatus 1 according to a first embodiment. The contents registration apparatus 1 of FIG. 1 comprises; a processing section 10 which includes a content registration section 11, a storage section 20, a modem 30 and a communication board 40. Moreover, these are respectively connected by a bus 50.

Here, the storage section 20 stores data related to voice or images. Moreover, a homepage provided by the contents registration apparatus is constructed in the storage section 20. The storage section 20 comprises a non volatile recording device such as a hard disk, a magneto-optical disc or the like.

The modem 30, in addition to the function of a conventional modem, incorporates a function which makes signals other than those related to communication protocol, that is voice sent from a telephone, into digital signals and outputs these. Moreover, the modem 30 incorporates a function which D/A converts digital data for a voice sent from the processing section 10, and outputs this to a public telephone line as voice. In other words, the modem 30 here is a so-called "voice modem".

The content registration section 11 inside the processing section 10 acquires as digital data via the modem 30, the voice or images sent from a telephone or a facsimile via a public telephone line, converts the acquired digital data into a content file which can be processed by a browser, and stores this in the storage section 20.

Here "Browser" is software for displaying a homepage on a web server.

"A content" is the text data, voice, or image etc. on a homepage. The text file, voice file or image file which become the substance of the contents are called "the content files". Moreover, the content related to text, the content related to voice and the content related to images are respectively called "text content", "voice content" and "image content".

" A content file which can be processed by a browser" is a content file in a file format for which a browser can process a text display, or voice playback, or can process an image display, and a file which is described in HTML format.

The processing section 10 also comprises a processing section (not shown in the figure) for realizing a function as a Web server. The processing section 10 is made up from a memory, a CPU (central processing unit) and the like, and the various functions of the processing section 10 are realized by loading into memory programs (not shown in the figure) functions of the processing section 10, and executing the programs.

The communication board 40 serving as a communication device, enables connection with a LAN (Local Area Network) or Internet. The user of a computer equipped with a browser accesses the contents registration apparatus 1 incorporating the Web server function via a LAN or Internet, and the communication board 40, and peruses the homepage constructed in the storage section 20. The communication board 40 is also able to respond to a dial-up connection. Moreover, the contents registration apparatus 1 can also directly peruse a homepage via the browser of the apparatus. Furthermore, the contents registration apparatus 1 performs reception of electronic mail via the communication board 40.

Here a LAN, Internet and dial-up connection are generally referred to as "a network".

As required, an input device, a display device, an output device or the like are connected to the contents registration apparatus 1. Here, input device means a keyboard, a mouse or the like. Display device means a CRT (Cathode Ray Tube), a liquid crystal display or the like. Moreover, output device means a printer or the like.

Next, is a description of an example of a file (data) which is stored in the storage section 20.

FIG. 2 is a diagram showing an example of storage contents of the storage section 20 in the first embodiment. In FIG. 2 only the files related to the processing of the content registration section 11 are shown. Moreover FIG. 2 is an example of where the content file to be updated by the content registration section 11, is a voice file. This file, for convenience, is stored in a specified directory, here a content directory 100.

In FIG. 2 three files, namely content.wav, www.wav, and content.html are stored in the content directory 100.

Here, content.wav is a file in which is recorded a voice announcement to the person accessing the contents registration apparatus 1 with a telephone or the like. The file format of the content.wav is the WAV file format, being the standard file format for voice and music.

The www.wav is a file in which the voice of a person gaining access by telephone is stored, being the content file to be registered or updated by the content registration section 11. Here, the file format of the content.wav is also the WAV file format.

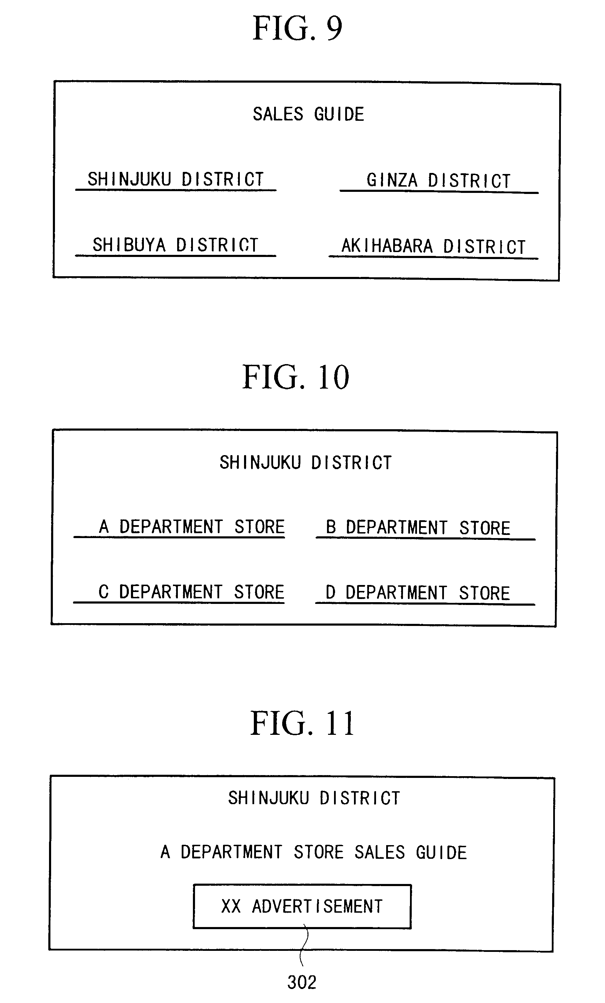

The content.html is a file which is described by the HTML format for displaying on a homepage. Inside this file, www.wav is specified as a BGM (Back Ground Music) file. FIG. 11 is an example of where content.html is displayed with a browser. For example, if the voice content of www.wav is "today's special for meat", and the user on a local area network or the Internet accesses the content.html, the display shown in FIG. 11 is carried out by the browser in the user's computer on the display device thereof. Furthermore, a voice saying "today's special for meat" plays to the speaker of the user's computer as BGM.

In the following, a file for which the file extension is "wav" is a file in WAV file format. Furthermore, a file for which the file extension is "html" is a file described by HTML.

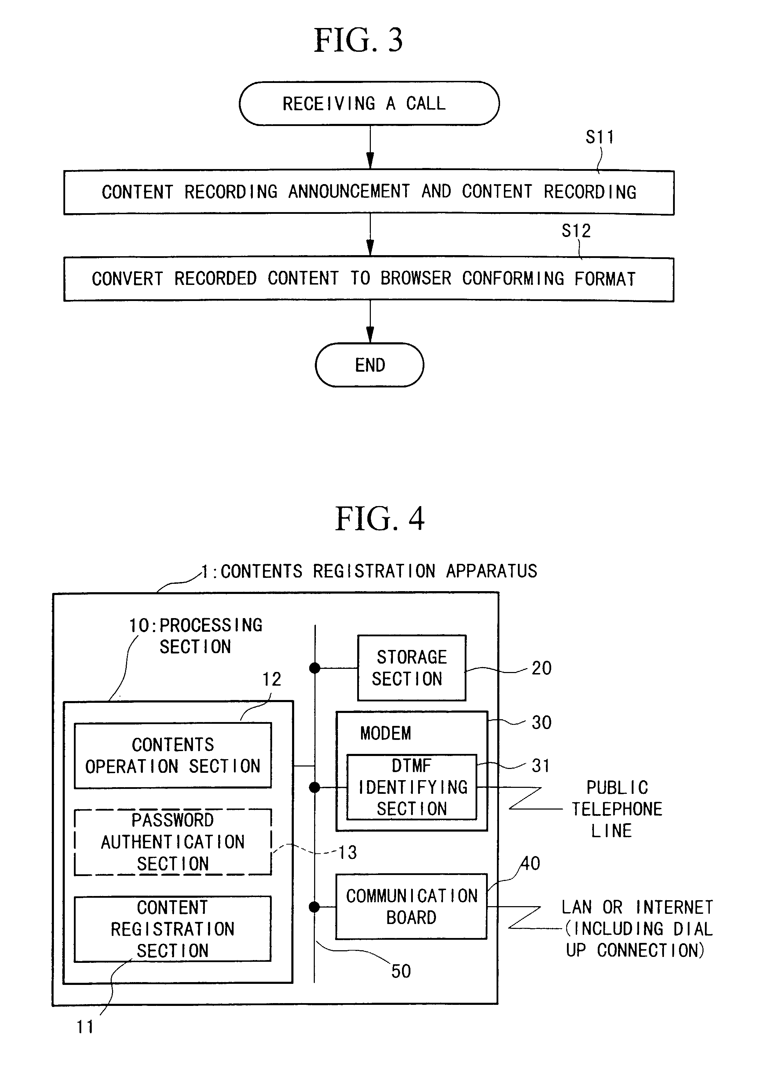

Next is a description of the operation of the contents registration apparatus 1, with reference to FIG. 3. Here the description is for where access to the contents registration apparatus 1 is carried out using a telephone via a public telephone line.

When a call is received, that is, an inward call, the modem 30 detects the call and after line connection processing notifies the processing section 10 of the inward call. Once notification has been carried out, the processing section 10 activates the content registration section 11 to start processing by the content registration section 11.

At first, the content registration section 11 plays the voice announcement as required, and then acquires as digital data via the modem 30 the voice that is sent from the telephone via the public telephone line, (step S11). This processing is performed as follows, being one example.

The content registration section 11 refers to the content directory 100, opens the file content.wav in which is stored voice announcement, and outputs digital data related to the announcement to the modem 30.

The modem 30 then D/A converts the digital data related to the announcement and outputs this to the public telephone line. The announcement are for example "Executing content update. Please record after the tone. Beep". The processing where the contents registration apparatus 1 performs voice announcement in this way, to a person making a telephone call to the contents registration apparatus 1, is referred to hereunder as "announcement processing".

With the tone "beep" as the cue, the person making the telephone call then utters the recording content, and on completion of the utterance hangs up the telephone, thus terminating the call.

The content registration section 11 acquires as digital data via the modem 30, the content of the utterance following the beep, up until the call is cut off. Here, the content registration section 11 stores the acquired digital data of the voice in a memory constituted by the processing section 10. Here the utterance contents are "Today's special for fish".

When the call is cut off and acquisition of digital data of the voice terminates, the content registration section 11 then makes the stored digital data for the voice into a file format which can be processed by a browser, that is into a browser conforming file format (step S12). This processing is performed as follows, being one example.

The content registration section 11 converts the digital data of voice into a WAV file of 8 [kHz] sampling, 8 [Bit/Sampling], PCM (Pulse Code Modulation) format, being a browser conforming file format. Then registration or updating of the contents is performed by overwriting with this file and saving in the content directory 100 as www.wav. In the case where there is no www.wav in the content directory 100, the content registration section 11 newly creates a file named www.wav, and saves this in the content directory 100.

After such updating processing, if a user on a local area network or the Internet accesses the content.html file in FIG. 2, the display shown in FIG. 11 is shown on their display device, and a voice saying "today's special for fish" plays as BGM on their speaker.

The content registration section 10 operates in the above manner.

In the case where the modem 10 incorporates a function which detects and identifies DTMF (Dual Tone Multi Frequency) signals transmitted by pressing the "*" button, the "#" button or the numeral buttons from "0" to "9" on the telephone, and then notifies the identification result, then the following is possible. Here "identification result" is information which shows if any of the "*" button, the "#" button or the numeral buttons from "0" to "9" has been pressed.

The voice announcement stored in content.wav is; "Updating content. Please press star (*) and make a recording, then press hash (#)." The content registration section 10 first performs the above announcement processing.

Next, the content registration section 11 acquires the voice digital data via the modem 10, over a range from a point when the identification information (*) detected and identified by the modem 10 is acquired until the next identification information (#) is acquired.

By the above procedure, the person making the telephone call can freely set the recording start timing and the recording finish timing. As a result, the person making the telephone call can first compile the recording content (utterance content) in their head before starting recording in the content registration section 11.

In step S11, the content registration section 11 records all of the utterance content while the line is connected, without carrying out announcement processing, and the recorded voice in the memory as the modified content.

With the above, the case for where the content related to voice is updated in the contents registration apparatus 1 by telephone has been described as an example. However it is also similarly possible to access the contents registration apparatus 1 by facsimile, and update the content related to images.

In this case, in FIG. 2, instead of the www.wav file being the content file related to voice, a www.jpg file or a www.gif file, being a content file related to a image is stored in the content directory 100. Furthermore, the content. html is a file where www.jpg or www.gif is specified as an image display file. Here the file www.jpg is a file in JPEG (Joint Photograph Coding Experts Group) format, while the file www.gif is a file in GIF (Graphic Interchange Format) format, both being file formats which can be processed by a browser. Here, this is stored as a file www.jpg of JPEG format. In the following, a file where the file extension is "jpg" is a JPEG format file, while a format where the file extension is "gif' is a GIF format file.

In the case of updating a content related to a image, the content registration section 11 does not play the announcement in step S11 of FIG. 3, but acquires via the modem 30, the digital data of the Huffman coded image sent from the facsimile and stores this in memory.

Then in step S12, the content registration section 11 performs decode processing on the stored digital data, converts this to a file www.jpg of JPEG format, and overwrites this onto the file www.jpg in the content directory 100.

By means of the above processing, the contents registration apparatus 1 performs updating of the content related to a image using a facsimile.

Incidentally, in the case where as heretofore the updated content file is created and transmitted by FTP, then with the WAV file format of 8 [kHz] sampling, 8 [Bit/Sampling], PCM (Pulse Code Modulation) format, for a one second voice recording, a data capacity of on average 7 [Kbyte] is required. For example, when the execution transmission speed of the circuit is 14.4 [Kbyte/sec], then to transmit a WAV file containing one second of voice takes at least four seconds (=7 x 8 / 14.4).

On the other hand, with the contents registration apparatus 1 of the present invention, since the voice transmission (recording) time is the time of the utterance, then voice recording during one second is completed in one second. By using the contents registration apparatus 1 of the present invention in this way, updating of the contents is carried out in a shorter time.

Moreover, with the contents registration apparatus 1 of the present embodiment, the voice file or image file which becomes the substance of the contents on a homepage can be updated using a readily available telephone or facsimile. Therefore, it becomes possible to perform updating of the contents, irrespective of location. In particular, in the case where the contents are updated using a portable telephone, the degree of freedom for the location where the contents can be updated is greatly increased.

Furthermore, with the contents registration apparatus 1 of the present embodiment, contents updating can be carried out without knowledge of FTP or voice recorders, as long as one knows how to use a telephone or facsimile.

(Second embodiment)

FIG. 4 is a diagram showing a structural example of a contents registration apparatus 1 according to a second embodiment. With the contents registration apparatus 1 according to this embodiment, the contents to be updated can be selected from amongst a plurality of contents, and updated. Hereunder, the description is focused on the points which differ from the contents registration apparatus described by the abovementioned embodiment.

As shown in FIG. 4, the contents registration apparatus 1 of this embodiment, the construction is such that, compared to the contents registration apparatus 1 of the first embodiment, the processing section 10 is further provided with a contents operation section 12, and a password authentication section 13, while the modem 30 is further provided with a DTMF identifying section 31.

Here the DTMF identifying section 31 detects and identifies the DTMF signal sent from a telephone or facsimile, and outputs this as identification information.

The contents operation section 12 uses the identification information detected and identified by the DTMF identifying section 31, to specify the content file to be updated from the plurality of content files stored in the storage section 20.

The password authentication section 31 acquires a password (A) using the identification information identified by the DTMF identifying section 31, and acquires from the storage section 20 a password (B) corresponding to the content file specified by the contents operation section 12. Then, the password authentication section 13, only in the case where the password (A) acquired via the DTMF identifying section 31, and the password (B) acquired from the storage section 20 match, makes the content registration section 11 operable.

With the content registration section 11 according to the present embodiment, the updating processing of the content is carried out by updating the content file specified by the contents operation section 12 with the content file obtained by converting the acquired digital data.

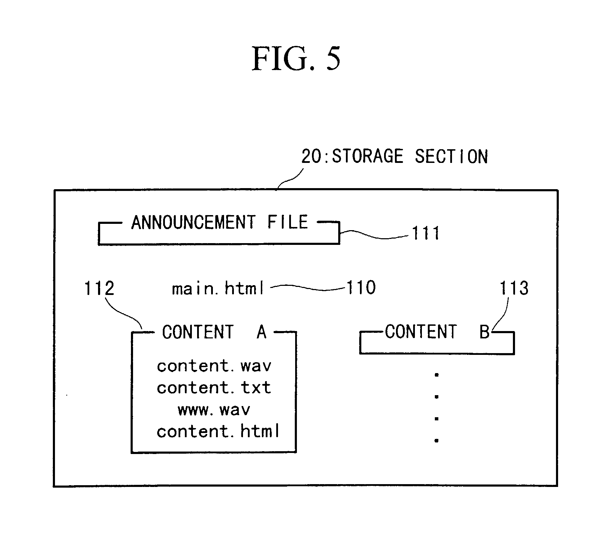

FIG. 5 is a diagram showing an example of storage contents of the storage section 20 in the second embodiment. In FIG. 5, only the files related to the processing of the contents operation section 12, the password authentication section 13 and the content registration section 11 are shown. Moreover, FIG. 5 is an example of where the content file to be updated is a voice file.

In FIG. 5, reference numeral 111 denotes a directory for storing a WAV file group in which is recorded the voice required at the time when the contents registration apparatus 1 effects announcement processing.

Furthermore, in the storage section 20, there is stored a plurality of content files. In the directories denoted by reference numerals 112, 113,... is respectively stored a single content file. With this embodiment, the respective contents are distinguish using the directory structure of the storage section 20.

The directories indicated by reference numerals 112, 113,... contain four files, namely content.wav, content.

txt, www.wav, content.html, corresponding to the respective single content files.

Here content.wav is a file in which is recorded the voice announcement which plays to the person accessing to the contents registration apparatus 1 by telephone or the like. This voice announcement is the subject matter to be announced which also includes the subject matter of the contents. For example, with the directory denoted by reference numeral 112, if this is made one related to contents related to A department store, then the announcement subject matter may be "Updating contents related to department store A. Please press star "*" and make a recording, then press hash (#)". In this way, a person wishing to update the contents can confirm the subject matter of the contents to be updated prior to recording.

content.txt is a file which contains the password for the content inside the same directory.

www.wav and content.html are as described for the first embodiment.

Moreover, main.html (110) is stored in the storage section 20. This is a file in which the link information for content.html inside the respective directories 112, 113,... is principally described. Since the file main.html incorporates link information for the respective contents inside the storage section 20, a user on the LAN or Internet circuit accesses this file main.html to thereby simplify access to the respective contents inside the storage section 20.

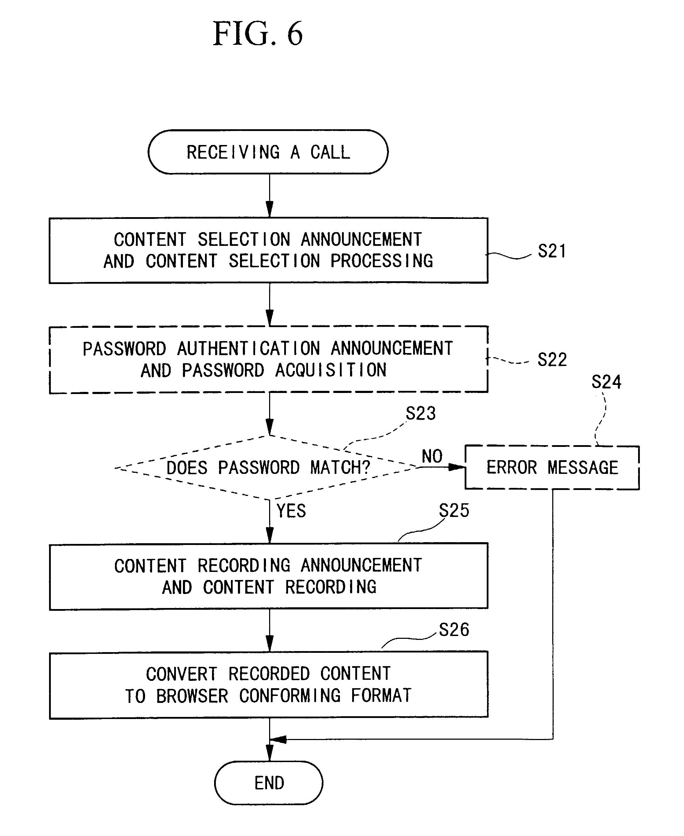

Next is a description of the operation of the contents registration apparatus 1 with reference to FIG. 6. Here the description is for where access to the contents registration apparatus 1 is carried out using a telephone via a public telephone line.

When a call is received, that is, an inward call, the modem 30 detects the call and after line connection processing notifies the processing section 10 of the inward call. Once notification has been made, the processing section 10 activates the contents operation section 12 to start processing by the contents operation section 12.

At first, the contents operation section 12 uses the identification information detected and identified by the DTMF identifying section 31 to specify the content file to be updated from the plurality of content files stored in the storage section 20 (step 21). This processing is performed as follows, being one example.

The contents operation section 12 performs announcement processing using the file for announcing the contents selection, stored in the directory 111. As one example of an announcement, the subject matter may be "Please specify the contents to be accessed using a five digit number".

A person accessing from a telephone knows beforehand the number for the content they wish to access, and after listening to the announcement, inputs the five-digit number by pressing the number buttons on the telephone. The input number is then notified to the contents operation section 12 via the DTMF identifying section 31. The contents operation section 12 then uses the five-digit number as specific information for the contents to be updated. Specifying the content file to be updated using the specific information for the content is carried out for example by the following methods:

1) the directory names of the directories 111, 113,... storing the respective contents are made the same as the specific information for the contents (for example the five digit number),
2) a file in which correspondence has been made between of the directory names of the directories 111, 113, ... storing the respective contents and the specific information for the contents, is stored in the storage section 20, and this is referred to.

Here the respective directories 112, 113,... correspond to respective single contents, and only contain one content file. Hence by specifying the directory, the content file to be updated can be specified.

Next, the password authentication section 13 is activated, and password authentication processing is performed. This processing is performed as follows.

The DTMF identifying section 31 performs announcement processing using the file for announcing password authentication, stored in the directory 111. As one example of an announcement, the subject matter may be "Please input your password and then press hash (#)".

The password authentication section 13 acquires a password (A) using the identification information identified by the DTMF identifying section 31 (step S22).

Next, the password authentication section 13 refers to the file content.txt in the directory stored in the content file specified in step S21 by the contents operation section 12, to thereby acquire the password (B) set for the content file. The password authentication section 13 then makes a comparison between the password (A) and the password (B) (step S23).

In the case where the two passwords do not match, the password authentication section 13 performs announcement processing to announce an error message (step S24), and specifies call disconnect processing to the modem 30 to terminate processing.

On the other hand, in the case where the two passwords match, the password authentication section 13 activates the content registration section 11 to thereby enable operation of the content registration section 11.

The activated content registration section 11 acquires via the modem 30, the voice sent from the telephone via the public telephone line (step S25). The content registration section 11 then converts the acquired digital data into a content file of WAV file format and overwrites this onto the content file specified in step S21, to thereby perform registration or updating of the content file (step S26). With the operation of the content registration section 11, the point where the content file specified in step S21 by the contents operation section 12 is replaced with the content file obtained by converting the acquired digital data differs, however other points are as described for the first embodiment.

As with the first embodiment, the content file related to images can be updated from a facsimile. In this case,

1) the facsimile is set in a manual transmission mode where facsimile transmission is started after line connection by pressing a predetermined

button on the facsimile, and

2) the announcement subject matter in step S25 of FIG. 6 is "Updating a content related to A department store. Please start facsimile transmission after the tone. Beep". With this tone "beep" as the cue, the person using the facsimile then presses the button on the facsimile for starting facsimile transmission.

In the above manner, with the contents registration apparatus 1 according to this embodiment, by incorporating the contents operation section 12, then also in the case where a plurality of contents are stored in the storage section 20, the content to be updated can be selected from amongst these and updated.

Moreover, by incorporating the password authentication section 13, unauthorized content updating can be prevented. In the case where security is not required in updating the contents, the password authentication section 13 in FIG. 4 can be omitted, and the content.txt in FIG. 5 can be removed. The contents registration apparatus 1 at this time performs in turn the processing shown in steps S21, S25 and S26 of FIG. 6.

(Third Embodiment)

This embodiment relates to a contents registration apparatus 1 where group divisions of related contents are made, and updating can be made by selecting any of the contents from amongst the group divided contents. Hereunder, the description is focused on the points which differ from the contents registration apparatus described for the beforementioned embodiments.

The structure of the contents registration apparatus 1 of this embodiment is the same as for FIG. 4. However, the following points differ from the contents registration apparatus 1 described for the second embodiment:

1) the storage section 20 is provided with a hierarchical structure for grouping of the contents, and the content files are stored inside the hierarchical structure, and

2) the contents operation section 12 uses the identification information from the DTMF identifying section 31 to perform processing to specify the content file to be updated which is inside the hierarchical structure stored in the storage section 20.

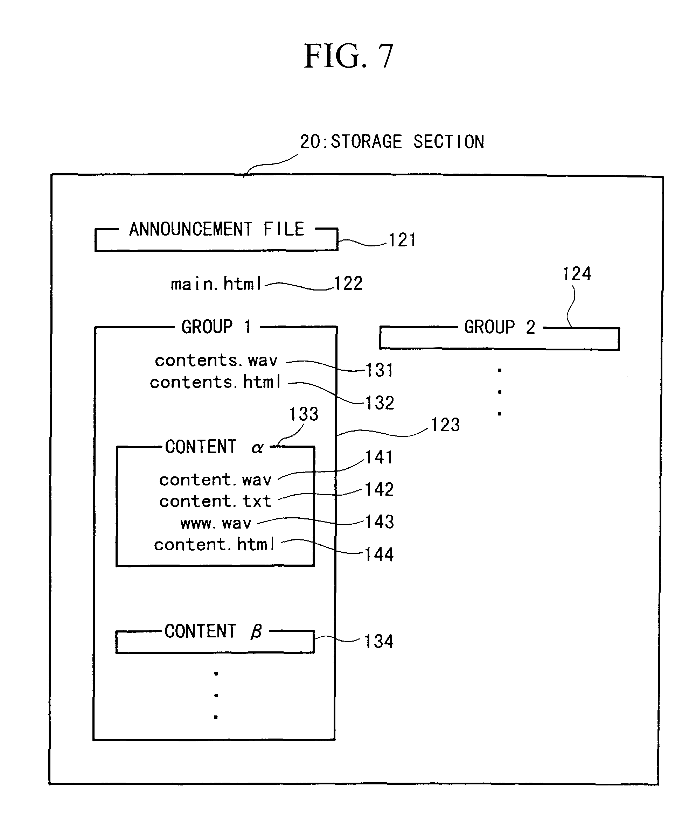

FIG. 7 is a diagram showing an example of storage contents of the storage section 20 in the third embodiment. In FIG. 7, only the files related to the processing of the contents operation section 12, the password authentication section 13 and the content registration section 11 are shown. Moreover, FIG. 7, is an example of where the content file to be updated is a voice file.

Next is a description of the storage contents of the storage section 20.

In FIG. 7, reference numeral 121 denotes a directory for storing a WAV file group in which is recorded the voice announced by the contents registration apparatus 1.

Furthermore, in the storage section 20, there is stored a plurality of content files. These are grouped into related content groups. With this embodiment, the grouping is realized using the directory structure of the storage section 20. In FIG. 7, the directories denoted by reference numerals 123, 124, ... are prepared as directories for grouping.

The directories 123, 124, ... for grouping store respective directories 133, 134, ... corresponding to respective single contents, and contents.wav (131), contents.html (132 etc.). Here the respective directories 133, 134, ...related to the contents, contain content.wav (141), content.txt (142), www.wav (143), and content.html (144). These files are the same as the files contained in the respective directories 112, 113, ... of FIG. 5, and hence description thereof is omitted.

The contents.wav (131) in the directories 123, 124, ... for grouping, is a file in which is recorded the voice announcement which plays to the person accessing the contents registration apparatus 1 by telephone or the like. This voice announcement is the subject matter to be announced which also includes the subject matter of the grouped contents. For example, if the directory 123 for grouping is made a directory storing the content group related to a department store in the Shinjuku area, then the announcement subject matter may be "This is the Shinjuku department stores. Please press 1# for A department store, 2# for B department store.....". In this way, a person wishing to update the contents can confirm which contents are in the group.

contents.html (132) is the file which is inside the directory 123 for grouping. It is the file in which the link information for the content.html inside the respective directories 133, 134, ... corresponding to the contents, is mainly described. FIG. 10 is an example of a display image of the contents.html (132) constructed by a browser, while FIG. 11 is an example of the display image of the content.html (144) in the directory 133.

Furthermore, main.html denoted by the reference numeral 122 is stored in the storage section 20. This is a file in which the link information for the contents.html (132 etc.) inside the respective directories 123, 124, ... for grouping is mainly described. This file main.html incorporates link information for the each group which contain the contents which are respectively related, inside the storage section 20. Hence a user on the LAN or Internet accesses this file main.html to thereby simplify access to the respective groups inside the storage section 20. An example of a display image of the main.html (122) constructed by a browser is shown in FIG. 9.

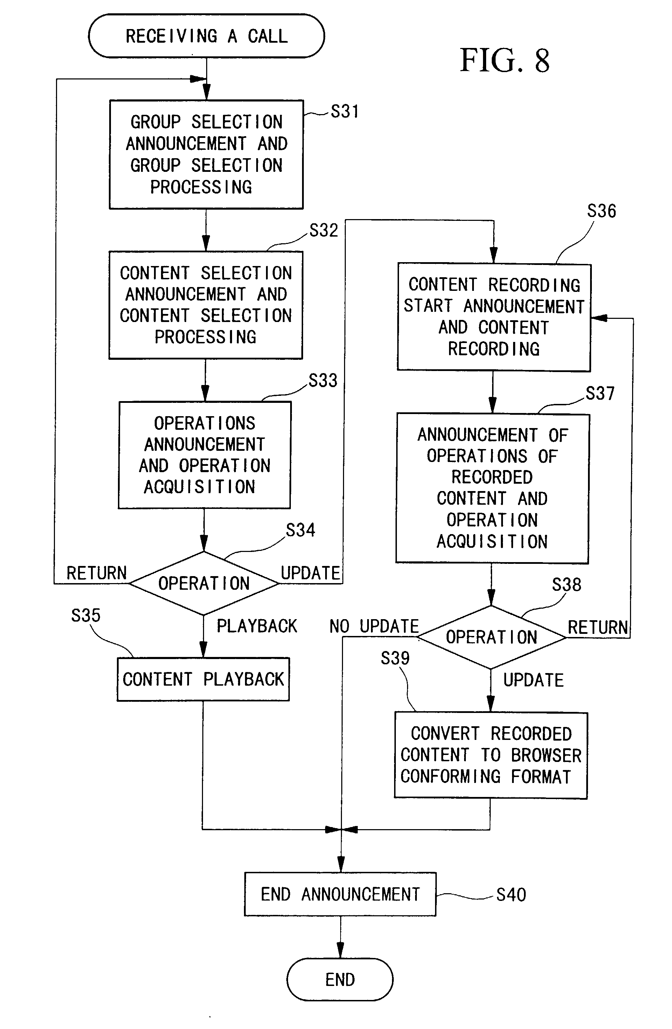

Next is a description of the operation of the contents registration apparatus 1 with reference to FIG. 8. Here the description is for where access to the contents registration apparatus 1 is carried out using a telephone via a public telephone line.

When a call is received, that is, an inward call, the modem 30 detects the call and after line connection processing notifies the processing section 10 of the inward call. Once notification has been made, the processing section 10 activates the contents operation section 12 to start processing by the contents operation section 12.

At first the contents operation section 12 uses the identification information detected and identified by the DTMF identifying section 31 to obtain the specific information for the group which contains the content to be updated. Then based on the specific information for the group, the contents operation section 12 specifies the group containing the content to be updated, from the plurality of groups stored in the storage section 20 (step S31). This processing is performed as follows, being one example.

The contents operation section 12 performs announcement processing using the file for announcing the group selection, stored in the directory 121. As one example of an announcement, the subject matter may be "Please specify the group to be accessed using a five digit number".

A person accessing from a telephone knows beforehand the number for the group they wish to access, and inputs the five digit number by pressing the number buttons. The input number is then notified to the contents operation section 12 via the DTMF identifying section 31. The contents operation section 12 then makes the five digit number the specific information for the group, and specifies the group which includes the content file to be updated. Specifying the group using the specific information for the group is carried out for example by the following methods:

1) the directory names of the directories 123, 124 ... for grouping are made the same as the specific information for the group (for example the five digit number),
2) a file in which correspondence has been made between of the directory names of the directories 123, 124, ... of the group, and the specific information for the groups, is stored in the storage section 20, and this is referred to.

Here the group denoted by the reference numeral 123 in FIG. 7 is the selected group.

Next, the contents operation section 12 uses the identification information detected and identified by the DTMF identifying section 31 to obtain the specific information for the contents to be updated in the selected group. The contents operation section 12 then specifies the content to be updated from the plurality of contents in the selected group stored in the storage section 20 (step S32). This processing is performed as follows, being one example.

At first, the contents operation section 12 performs announcement processing using the file contents.wav (131) in the directory 123 for announcing the content selection. As one example of an announcement, the subject matter may be as mentioned before, "This is the Shinjuku department store. Please press 1# for A department store, 2# for B department store.....".

A person accessing from a telephone inputs the number of the content to be updated in accordance with the announcement by pressing the number buttons on the telephone. The input number is then notified to the contents operation section 12 via the DTMF identifying section 31. The contents operation section 12 then makes this number the specific information for the content, and specifies the content file to be updated. Specifying the content file to be updated, using the specific information for the contents is carried out for example by the following methods: 1) the directory names of the directories 133, 134, ... storing the respective contents are made the same as the specific information for the contents, 2) a file in which correspondence has been made between of the directory names of the directories 133, 134, ... storing the respective contents, and the specific information for the contents, is stored in the storage section 20, and this is referred to.

Here the respective directories 133, 134, ... contain respective only one content file. Hence by specifying the directory, the content file to be updated can be specified.

Furthermore, to the announcement carried out in step 32, the subject matter and 0# to return" can be added, and if the "0#' is pressed, control returns to step S31. In this way, in the case where a person desiring to update the content inputs a wrong number in step S31, they are able to reinput the correct number.

Here the contents of the directory denoted by the reference numeral 133 in FIG. 7 are selected.

Next, the contents operation section 12 uses the identification information detected and identified by the by the DTMF identifying section 31 to acquire the operation for the selected content (step S33). At this time, the contents operation section 12 plays back the file content.wav (141) in the directory 133, to thereby perform announcement processing such as "A department. Please press 1# to listen to the voice content. To update the contents, enter your password followed by #, to return to the previous menu press 0#", thereby acquiring the operation.

The contents operation section 12 then performs processing in accordance with the acquired operation (step S34). Here with the contents operation section 12, if the operation are "Return (0#)", control returns to step S31, while if "Playback (1#)", playback processing for the content file www.wav (143) is executed. Then, once the password (??#) for updating is input, the contents operation section 12 activates the password authentication section 13, and delivers the input password (??#) , to thereby effect password authentication processing. The operation of the password authentication section 13 is as described for the second embodiment, and hence description is omitted.

With the present case, the password is input, and the password is correct.

The content registration section 11 is then activated. The content registration section 11 performs processing for acquiring via the modem 30 the voice sent from a telephone via a public telephone line (step S36). This processing is similar to in step S11 of FIG. 3, and hence description is omitted.

Next, the content registration section 11 performs announcement processing of the operation for the voice digital data acquired in step S36, and performs acquisition of the operation thereof (step S37). At this time, the contents operation section 12 plays back the WAV file related to this processing, in the directory 133 to thereby perform announcement processing such as "To update the contents press (1#), to playback the new contents press (2#), to stop updating press (3#), to return to the previous menu press 0#", thereby acquiring the operation contents.

The contents operation section 12 then performs processing in accordance with the operation (step S38). Here with the content registration section 11, if the operation contents are "Return (0#)", control returns to step S36, while if "playback new contents (2#)" (not shown in FIG. 8), the playback processing of the voice acquired in step S36 is performed and control again returns to step S37. Moreover, if "update (1#)", control proceeds to step S39, while if no update (3#), control proceeds to step S40.

If the operation is "update (1#)", the content registration section 11, converts the acquired digital data in the step S36 into a content file which can be processed by a browser, and performs registration or update processing of the content by writing over the content file specified in step S32 (step S39). Details of this processing are as described for step S12 of FIG. 3.

Finally, the contents operation section 12 performs announcement processing for processing completion, and then performs call disconnect processing for the modem 30 (step S40) to terminate processing.

The above outlines the operation of the contents registration apparatus 1 of the present embodiment.

Furthermore, by setting the facsimile in a manual transmission mode, then selection and updating of the content file related to the image to be updated from amongst the contents that have been grouped, using the DTMF signal from the facsimile, is also possible by carrying out substantially the same processing.

As above, with the contents registration apparatus 1 according to the present embodiment, by providing the contents operation section 12, then also in the case where related contents are grouped, the contents to be updated can be selected and updated.

With the present embodiment, there are the directories 123, 124, ... for grouping, and these directories 123, 124, ... have been described as having a hierarchical structure of two layers which include a plurality of directories 133, 134, ... related to the contents. However correspondence with even greater hierarchical structures is also possible.

(Fourth Embodiment)

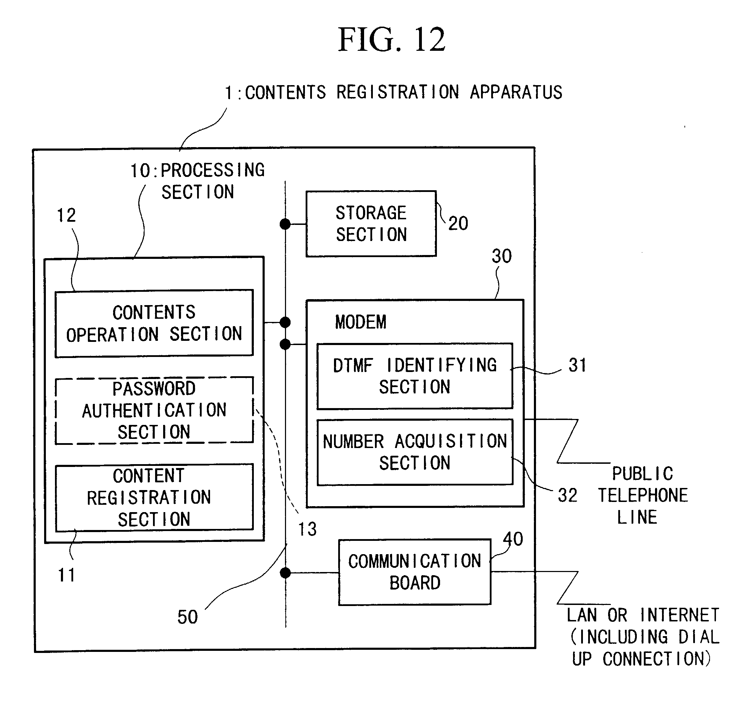

FIG. 12 is a diagram showing a structural example of a contents registration apparatus 1 according to a fourth embodiment. This embodiment is related to a contents registration apparatus 1 which specifies and updates the content to be updated using a number display service (or a call display service), being a pre-call connection information notification service. Hereunder, the description is focused on the points which differ from the contents registration apparatus described for the beforementioned embodiments.

In FIG. 12, with the contents registration apparatus 1 of this embodiment, the construction is such that compared to the contents registration apparatus 1 of the second embodiment, the modem 30 is further provided with a number acquisition section 32.

Here the number acquisition section 32 is a processing section corresponding to the communication protocol of the number display service, pre-call connection information notification, and the telephone number (the caller's phone number) of the telephone or facsimile, provided by this service is acquired from the standard telephone network prior to taking the call, and output.

With the contents operation section 12 of this embodiment, the telephone number of the telephone or facsimile acquired by the number acquisition section 32 is used and made the specific information for the contents, to specify the content file to be updated from the plurality of content files stored in the storage section 20.

The storage files in the storage section 20 in this embodiment are similar to the example of the storage files in the storage section 20 in the second embodiment shown in FIG. 5, and hence description thereof is omitted.

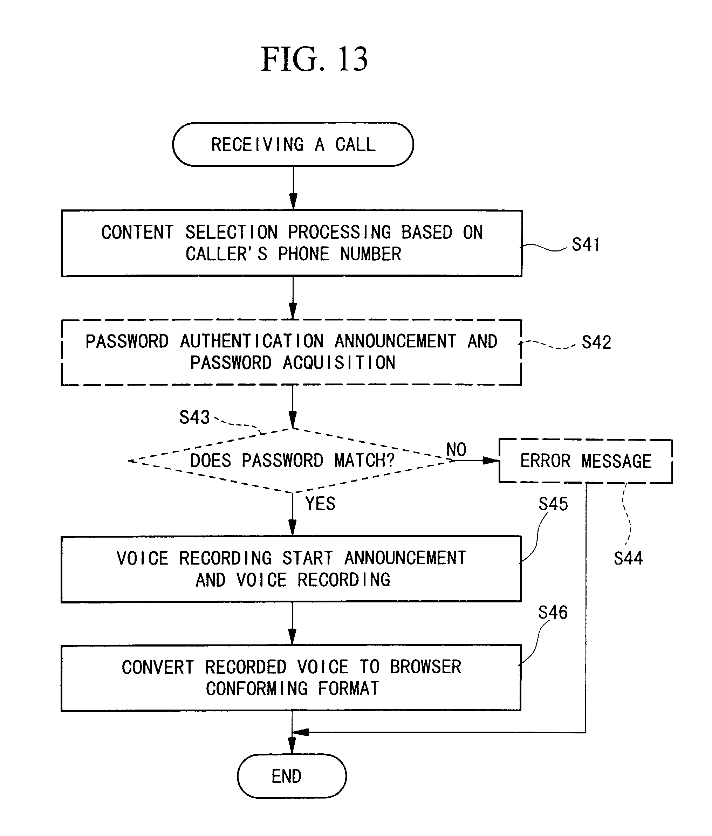

Next is a description of the operation of the contents registration apparatus 1 with reference to FIG. 13. Here the description is for the case where access to the contents registration apparatus 1 is carried out using a telephone via a public telephone line.

When a call is received, that is, an inward call, the modem 30 detects the call and after line connection processing notifies the processing section 10 of the inward call. Once notification has been made, the processing section 10 activates the contents operation section 12 to start processing by the contents operation section 12.

At first, before taking the call, the contents operation section 12 obtains the telephone number of the caller (the caller's phone number) which is detected by the number acquisition section 32. The contents operation section 12 then makes this telephone number the specific information for the content, and specifies the content file to be updated from the plurality of content files stored in the storage section 20 (step 41).

Specifying the content file to be updated using the specific information for the contents is carried out for example by the following methods:

1) the directory names of the directories 112, 113, ... storing the respective contents are made the same as the telephone number, being the specific information for the content, or
2) a file in which correspondence has been made between of the directory names of the directories 112, 113, ... storing the respective contents, and the telephone number, being the specific information for the content, is stored in the storage section 20, and this is referred to.

Here the respective directories 112, 113, ...each only contain one content file. Hence by specifying the directory, the content file to be updated can be specified.

Next, if necessary, the password authentication section 13 is activated, and password authentication processing is performed (S42).

The subsequent processing from the following steps S42 to S46 respectively corresponds to from steps S22 to S26 of FIG. 6, and hence description is omitted.

As above, with the contents registration apparatus 1 according to the present embodiment, there is a processing section for corresponding to the number display service, being the pre-call connection information notification service giving information prior to call connection, and a number acquisition section 32 is provided which acquires the telephone number of the telephone or facsimile and outputs this. The contents registration apparatus 1 then performs specification of the content file to be updated using the acquired telephone number of the caller. In this way, the person intending to update the content need not input the specific information for specifying the individual content to be updated. The contents registration apparatus 1 according to this embodiment is particularly effective in the case where a person uses a telephone such as a portable telephone.

Moreover, by incorporating the password authentication section 13, unauthorized content updating can be prevented. In the case where security is not required in updating the contents, the password authentication section 13 in FIG. 12 can be omitted, and the content.txt in FIG. 5 can be removed. At this time, the contents registration apparatus 1 performs in turn the processing shown in steps S41, S45 and S46 of FIG. 13.

(Fifth Embodiment)

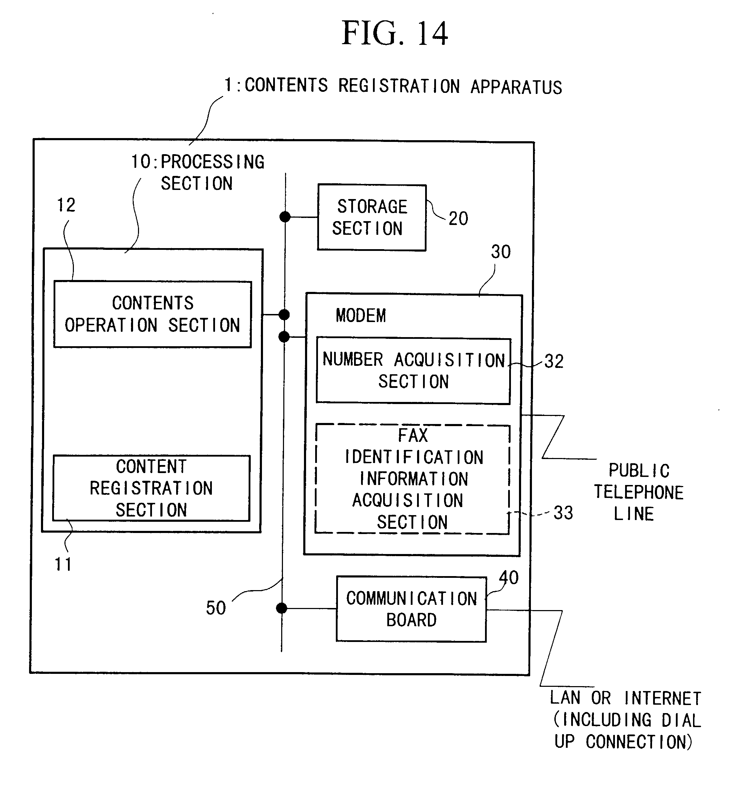

FIG. 14 is a diagram showing a structural example of a contents registration apparatus 1 according to a fifth embodiment. This embodiment is related to a contents registration apparatus 1 which specifies and updates the content to be updated using the telephone number of the facsimile on the calling side obtained using the number display service, or the identification information of the facsimile making the transmission, set in the facsimile. Hereunder, the description is focused on the points which differ from the contents registration apparatus described for the beforementioned embodiments.

In FIG. 14, with the contents registration apparatus 1 of this embodiment, the construction is such that compared to the contents registration apparatus 1 of the fourth embodiment, the modem 30 is provided with a number acquisition section 32 and a facsimile identification information acquisition section 33, while the processing section 10 is provided with only the contents operation section 12 and the content registration section 11.

Here, when there is information set in the facsimile such as the senders name, then after call connection, the facsimile identification information acquisition section 33 acquires and outputs this facsimile identification information sent from the facsimile.

With the contents operation section 12 of this embodiment, one or both of:

(1) the telephone number of the telephone or facsimile, acquired by the number acquisition section 32, and
(2) the identification information of the sending facsimile set in the facsimile, being the information obtained by the facsimile identification information acquisition section 33,

is used and made the specific information for the contents, to specify the content file to be updated from the plurality of content files stored in the storage section 20.

With the files in the storage section 20 of the present embodiment, the only point different from the files in the storage section 20 in the second embodiment shown in FIG. 5 is that www.wav is an image file becoming www.jpg or www.gif. Other parts are similar and hence description thereof is omitted.

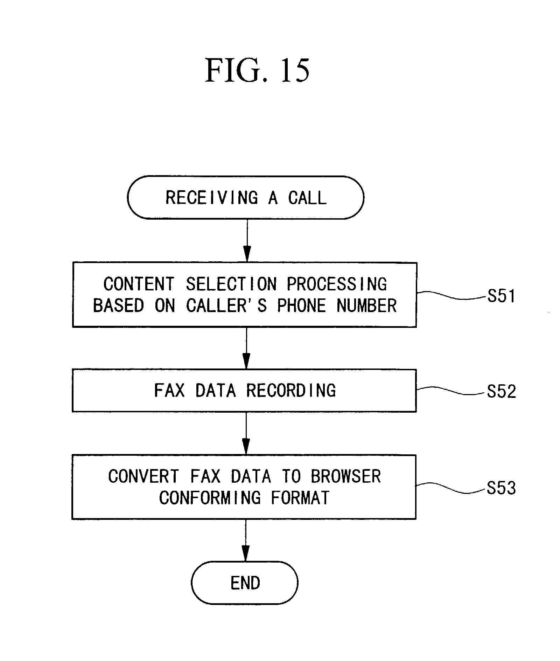

Next is a description of the operation of the contents registration apparatus 1 with reference to FIG. 15. Here the description is for the case where access to the contents registration apparatus 1 is carried out using a facsimile via a public telephone line.

When there is an inward call from a facsimile, the modem 30 detects the call and after line connection processing notifies the processing section 10 of the inward call. Once notification has been made, the processing section 10 activates the contents operation section 12 to start processing by the contents operation section 12.

At first, the contents operation section 12 acquires one or both of: the telephone number of the caller (the caller's phone number) which is detected before call connection by the number acquisition section 32, and the identification information of the facsimile obtained after call connection by the facsimile identification information acquisition section 33. The contents operation section 12 then uses the acquired information to specify the content file to be updated from the plurality of content files stored in the storage section 20 (step 51).

In the case where only one of the telephone number and the identification information for the facsimile is used for specifying the content file to be updated, then this is carried out for example by the following methods:

1) the directory names of the directories 112, 113, ... storing the respective contents are made the same as the telephone number or the facsimile identification information, being the specific information for the content, or
2) a file in which correspondence has been made between of the directory names of the directories 112, 113, ... storing the respective contents, and the telephone number or the facsimile identification information, being the specific information for the content, is stored in the storage section 20, and this is referred to.

Here the respective directories 112, 113, ...each only contain one content file. Hence by specifying the directory, the content file to be updated can be specified.

On the other hand, in the case where both the telephone number and the facsimile identification information are used, then the contents operation section 12 can use one as specific information for the contents, and the other as a password (password information). In this case the processing section 10 also includes the password authentication section 13.

Next the content registration section 11 is activated, and the content registration section 11 acquires the image data from the facsimile, and performs update processing on the content file specified in step S51 (S52, 53).

The processing of these steps S52 and S53 is similar to for the case of updating the content file related to images in steps S11 and S12 of FIG. 3. Hence description thereof is omitted.

With the present embodiment, in the case where the contents operation section 12 uses only the telephone number to perform specification of the content file to be updated, then the modem 30 need only be provided with the number acquisition section 32. Moreover, in the case where the contents operation section 12 uses only the facsimile identification information to perform specification of the content file to be updated, then the modem 30 need only be provided with the facsimile identification information acquisition section 33.

As above, with the contents registration apparatus 1 according to the present embodiment, specification of the content file to be updated is performed using one of both of: the telephone number of the facsimile from the number display service, pre-call connection information notification, and the facsimile identification information sent from the facsimile. In this way, the person intending to update the content need not input the specific information for specifying the individual content to be updated. Therefore, in this case updating of the content can be performed by the automatic transmission processing of the facsimile.

(Sixth embodiment)

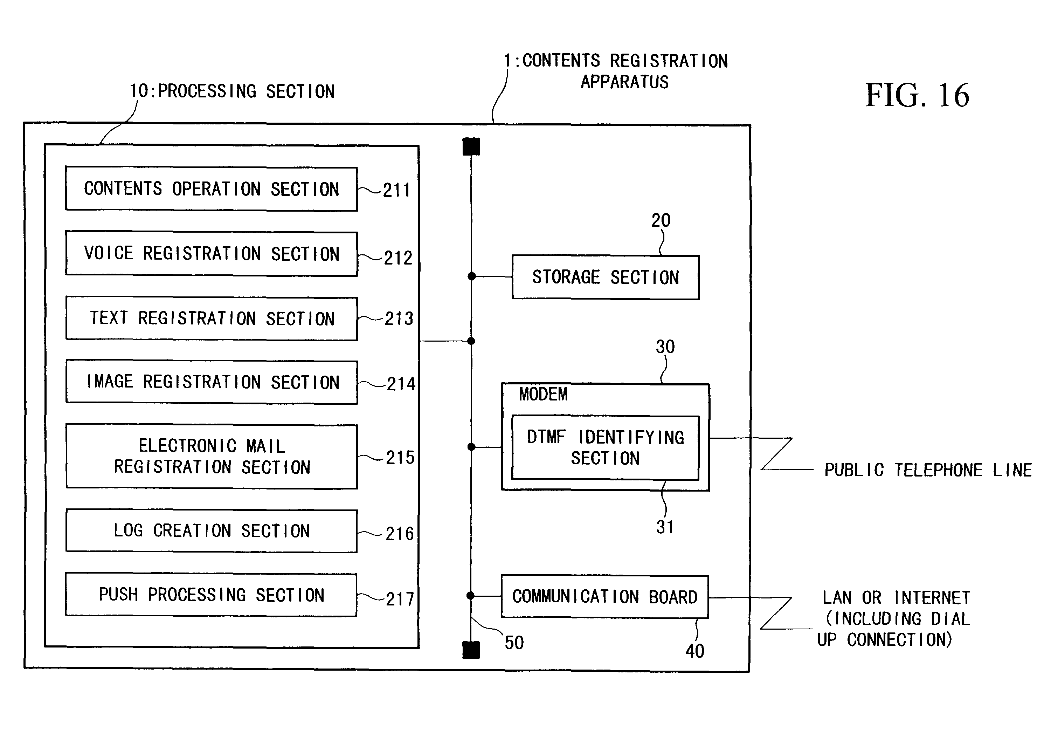

FIG. 16 is a diagram showing a structural example of a contents registration apparatus 1 according to a sixth embodiment. This embodiment is related to a contents registration apparatus 1 which can perform text registration using a DTMF signal, and contents registration using electronic mail. Furthermore, this embodiment is related to a contents registration apparatus 1 which creates a log related to registered files. The embodiment is also related to a contents registration apparatus 1 which prompts a user to input data related to files used for executing and retaining line connection to a predetermined terminal (telephone etc.). Hereunder, the description is focused on the points which differ from the contents registration apparatus described for the beforementioned embodiments.

With the contents registration apparatus 1 shown in FIG. 16, the storage section 20 stores data related to text, voice or images. Moreover, a homepage is constructed in the storage section 20.

The modem 30, in addition to the function of a conventional modem, incorporates a function which makes signals other than those related to communication protocol, that is voice sent from a telephone, into digital signals and outputs these. Moreover, the modem 30 incorporates a function which D/A converts digital data for a voice sent from the processing section 10, and outputs this to a public telephone line as voice. In other words, the modem 30 here is a so-called "voice modem". In addition, the modem 30 is further provided with a DTMF identifying section 31 for detecting and identifying a DTMF signal sent from a telephone or facsimile via a public telephone line, and outputting the identification result.

The processing section 10 performs processing for registration or updating of the contents based on the DTMF signal, a voice or an image sent from a telephone or facsimile via a public telephone line, or on electronic mail sent via a network. Furthermore, the processing section 10 is provided with a contents operation section 211, a voice registration section 212, a text registration section 213, an image registration section 214, an electronic mail registration section 215, a log creation section 216 and a push processing section 217. These various sections will be described separately in detail. Moreover, the processing section 10 also includes a processing section (not shown in the figures) for realizing the function of a web server.

Next is a description of an example of files (data) which are stored in the storage section 20.

A file for which the extension is "txt" is a text format file. Moreover, a file with an extension "dat" is a file in a previously determined data format.

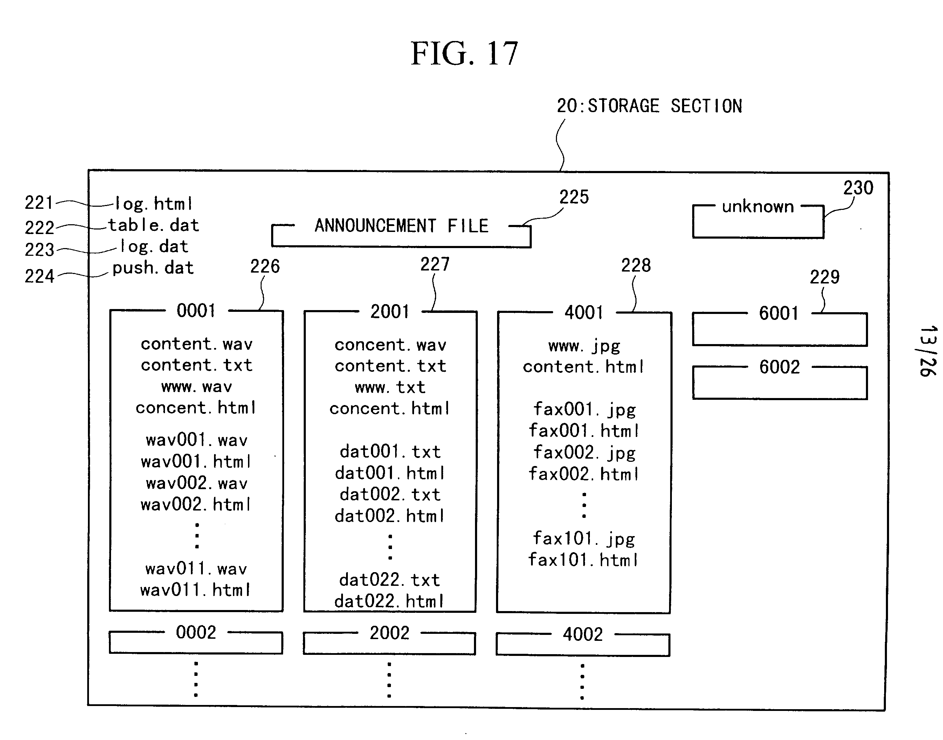

FIG. 17 is a diagram showing an example of files and directories in the storage section 20 in the embodiment. In FIG. 17, log.html (221), table.dat (222), log.dat (223) and push.dat (224) are stored as files in the specific directory (here directory name "Web") of the storage section 20.

Here log.html (221) is a file in HTML format which has a direct or indirect link to the registered respective content files. Moreover, this file is a file in which log information for the contents registered or updated in the contents registration apparatus 1 is stored. The file log.html has a format which can be processed by a browser.

The table.dat (222) is a data file which contains directory information storing the contents to be registered or updated.

The log.dat (223) is a data file which stores log information for contents which have been registered or updated in the contents registration apparatus 1. This is used at the time of updating log.html (221).

The push.dat (224) is a data file which is used when the contents registration apparatus 1 performs line connection to the telephone or facsimile which sends the contents, so that the contents registration or updating is performed positively, realizing a so called push function.

These files will be described separately in detail.

In the directory (Web) of the storage section 20 there is further included a plurality of directories.

Here the directory denoted by reference numeral 225 is a directory for storing the WAV file groups in which is recorded voice required when the contents registration apparatus 1 performs announcement processing.

The directory denoted by reference numeral 226 is a directory for storing content files for which the voice content have been registered or updated. In this directory is stored four files, namely content.wav, content.txt, www.wav, and content.html.

Here content.wav is a file in which is recorded a voice announcement which plays to the person accessing the contents registration apparatus 1 with a telephone or the like. This content.wav records the voice announcement directly related to the voice content stored in this directory.

The www.wav is a file in which the voice of the person gaining access by telephone is stored, being the content file to be registered or updated by the content registration section.

The content.txt is a file in which is stored the password for the content in the same directory.

The content.html is a file which is described by the HTML format for displaying on a homepage. Inside this file, www.wav is specified as a BGM (Back Ground Music) file. In this way, a user on the network accesses the content.html, so that the user can listen to the voice recorded in the www.wav as BGM.

Moreover, in the directory 226, the voice content recorded in the past are stored as contents update history, under file names wav001.wav, wav002.wav, wav003.wav, ... with serial numbers appended in age sequence. Furthermore, HTML files linked to these with the voice as contents are stored under file names wav001.html, wav002.html, wav003.html, ... with serial numbers appended in age sequence. Here the relation between the voice content recorded in the past and the HTML files linked to these, is the relation where the HTML file and the voice file with the same file names apart from the extension are the HTML file for the homepage and the contents thereof. For example, wav002.html, has wav002.wav as the content.

Moreover, with the latest voice file (for example wav011.wav) in the directory 226 and the voice file www.wav with the same content, then the latest HTML file (for example wav011.html) in the directory 226 and the HTML file content.html have the same content. The reason for this will be explained separately.

Furthermore with this embodiment, the directory names which contain the content files for which the voice content has been registered or updated, range from "0001" to "2000". These directories store the files under the same rules as for the directory 226.

The directory denoted by reference numeral 227 is a directory which stores the content files for which the text content has been registered or updated. In this directory are stored four files namely; content.wav, content.txt, www. txt and content.html.

The www.txt is a file in which text data input using the DTMF signal is stored, being the content file to be registered or updated by the content registration section.

The content.html is a file which is described by the HTML format for displaying on a homepage. Inside this file, www.txt is recorded as a link point. In this way, a user on the network accesses the content.html, so that the user can see the text data recorded in the www.txt.

The content.wav and content.txt are as described beforehand.

Moreover, in the directory 227, the text content registered in the past are stored as update history, under file names dat001.txt, dat002.txt, dat003.txt, ... with serial numbers appended in age sequence. Furthermore, HTML files having a link point to these text files as contents are stored under file names dat001.html, dat002.html, dat003.html, ... with serial numbers appended in age sequence. The relationship of these files is the same as the relationship described for directory 226.

Moreover, with the latest text file (for example dat022.txt) in the directory 227 and the text file www.txt with the same contents, then the latest HTML file (for example dat022.html) in the directory 227 and the HTML file content. html have the same contents.

Furthermore with this embodiment, the directory names which contain the content files for which the text content has been registered or updated, range from "2001" to "4000". These directories store the files under the same rules as for the directory 227.

The directory denoted by reference numeral 228 is a directory which stores the content files for which the image content has been registered or updated. In this directory are stored two files namely; www.jpg and content.html.

The www.jpg is a file in which image data set by facsimile is stored, being the content file to be registered or updated by the content registration section.

The content.html is a file which is described by HTML format for displaying on a homepage. Inside this file, www.jpg is recorded as a link point. In this way, a user on a LAN or the Internet accesses the content.html, so that the user can see the image data stored in the www.jpg.

Moreover, in the directory 228, the image content registered in the past are stored as update history, under file names facsimile001.jpg, facsimile002.jpg, facsimile003.jpg, ... with serial numbers appended in age sequence. Furthermore, HTML files linked to these with the image as contents are stored under file names facsimile001.html, facsimile002.html, facsimile003.html, ... with serial numbers appended in age sequence. The relationship of these files is the same as the relationship described for directory 226.

Moreover, with the latest image file (for example facsimile011.jpg) in the directory 228 and the image file www. jpg with the same contents, then the latest HTML file (for example facsimile011.html) in the directory 228 and the HTML file content.html have the same content.

Furthermore with this embodiment, the directory names which contain the content files for which the image content has been registered or updated, range from "4001" to "6000". These directories store the files under the same rules as for the directory 228.

The directory denoted by reference numeral 229 is a directory which stores the content files to be registered or updated by attachment files attached to electronic mail. With this embodiment, the directory names which contain the content files to be registered or updated by attachment files attached to electronic mail, range from "6001" to "8000".

The directory denoted by reference numeral 230, is a directory for storing in a content file which can be processed by a browser, contents which have been sent with the contents to be recorded or updated in an unspecified condition.

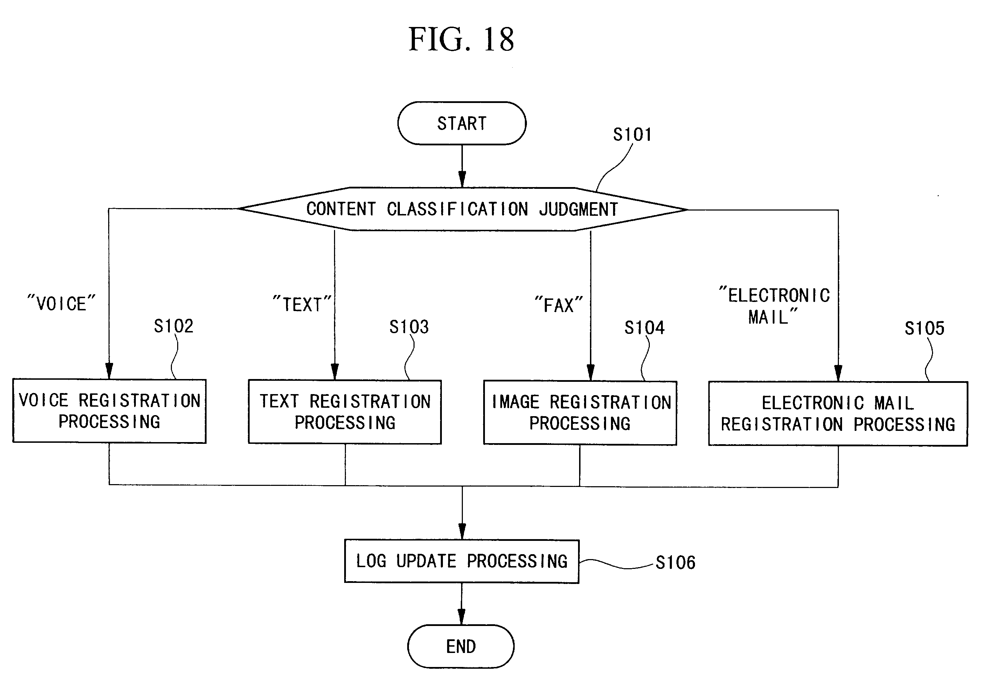

Next is a description of the operation of the contents registration apparatus 1 with reference to FIG. 18.

At first, the contents operation section 211 monitors whether there is a request for registration or updating of the content, by monitoring call notification etc. from the modem 30. Then, in the case where there is a request for registration or updating of the content, the contents operation section 211 judges which of the contents classes, that is, which of voice, text, or image is to be processed, or if the registration or update processing is by electronic mail. The contents operation section 211 then starts the processing section for processing these based on the judgment result (step S101).

In the case where the contents operation section 211 judges that there is a request for registration or updating of the voice content, then the voice registration section 212 is activated. The voice registration section 212 acquires as digital data via the modem 30, the voice sent from the telephone via the public telephone line, converts the acquired digital data into a content file (wav file) which can be processed by a browser, and stores this in a specific directory of the storage section 20 (step S102).

In the case where the contents operation section 211 judges that there is a request for registration or updating of the text content, then the text registration section 213 is activated. The text registration section 213 acquires as text data via the modem 30 and the DTMF identifying section 31 inside the modem, the DTMF signal sent via the public telephone line, converts the acquired text data into a content file (text file) which can be processed by a browser, and stores this in a specific directory of the storage section 20 (step S103).

In the case where the contents operation section 211 judges that there is a request for registration or updating of the image content, then the image registration section 214 is activated. The image registration section 214 acquires as digital data via the modem 30, the image sent from the facsimile via the public telephone line, converts the acquired digital data into a content file (JPEG file) which can be processed by a browser, and stores this in a specific directory of the storage section 20 (step S104).

In the case where the contents operation section 211 judges that there is a request for registration or updating of the contents by electronic mail, then the electronic mail registration section 215 is activated. The electronic mail registration section 215 decodes the content file attached to the electronic mail, and stores the decoded file in a specific directory of the storage section 20 (step S105).

When the registration or updating processing of the contents by the voice registration section 212, the text registration section 213, the image registration section 214, or the electronic mail registration section 215 has been completed, the log creation section 216 is activated. The log creation section 216, in the case where the content file is stored in the storage section 20, performs updating of the log file (log.html denoted by reference numeral 221 in FIG. 17) so as to have a direct or indirect link to these content files (step S106).

In the above manner, contents registration or updating processing is performed in the contents registration apparatus 1.

The push processing section 217 is provided with a call setting section and a content registration section (neither shown in the figure). By means of the call setting section, line connection to a telephone or facsimile sending the voice or image is performed. By means of the content registration section, the processing where a voice or image sent by a telephone or facsimile which is connected to the line by the call setting section is acquired as digital data via the modem 30, and made a content file which can be processed by a browser and stored inside a specific directory of the storage section 20, is performed. That is to say, the push processing section 217 is provided for realizing a push operation with respect to a terminal such as a telephone or facsimile, by the contents registration apparatus 1.

Hereunder the operation of these respective sections is described in detail.

[Contents operation section]

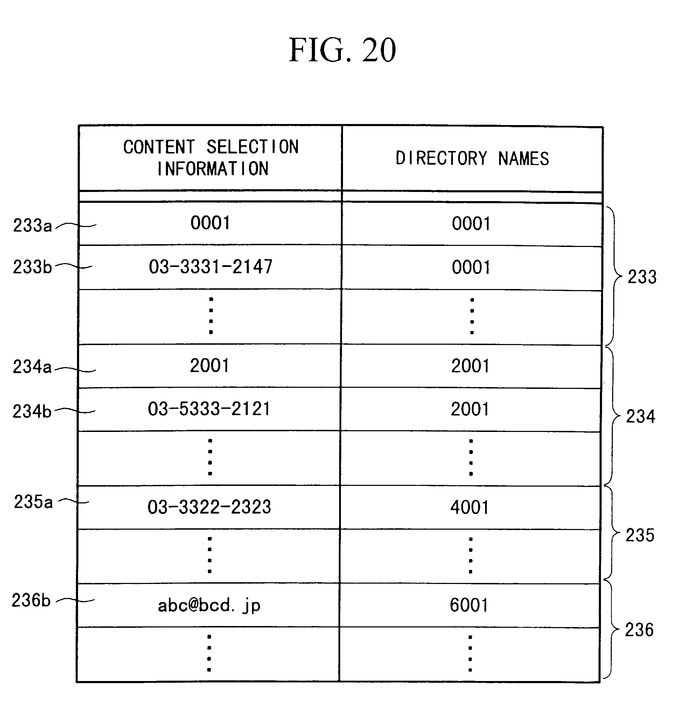

Before explaining the operation of the contents operation section 211, an explanation will be given of table. dat denoted by reference numeral 222 in FIG. 17, which is used by the contents operation section 211. FIG. 20 is a diagram showing an example of data structure for table.dat. As shown in the figure, table.dat 222 stores content selection information and information corresponding to the directory in which the contents are stored. As mentioned before, with the present embodiment, the relation between the directory names and the contents stored in that directory is as follows:

"0001" ∼ "2000" → voice contents
"2001" ∼ "4000" → text contents
"4001" ∼ "6000" → image contents
"6001" ∼ "8000" → contents to be registered or updated by electronic mail

Here in the case of registering or updating voice or text content from the telephone, both the selection of the content (specification) by a user using a DTMF signal, and selection of the content using the telephone number of the calling side obtained by the number display service, being the pre-call connection information notification service, is possible. Therefore, as shown by reference numerals 233, 234, the table.dat relates to the contents related to the voice or text from the telephone. The content selection numbers (233a or 234a) which the user specifies, or, the telephone numbers (233b or 234b) on the calling side, are related to the respective directory names.

Moreover, in the case where the image content are registered or updated by automatic transmission from a facsimile, selection of the content using the DTMF signal becomes difficult. Therefore, as shown by reference numeral 235, the table.dat relates to the image contents, and the telephone number (235a) on the calling side is related to the respective directory names.

Furthermore, in the case where the contents are registered or updated by electronic mail, then as shown by reference numeral 236, the table.dat relates to the mail address 236a of the sender of the electronic mail, for each directory name.

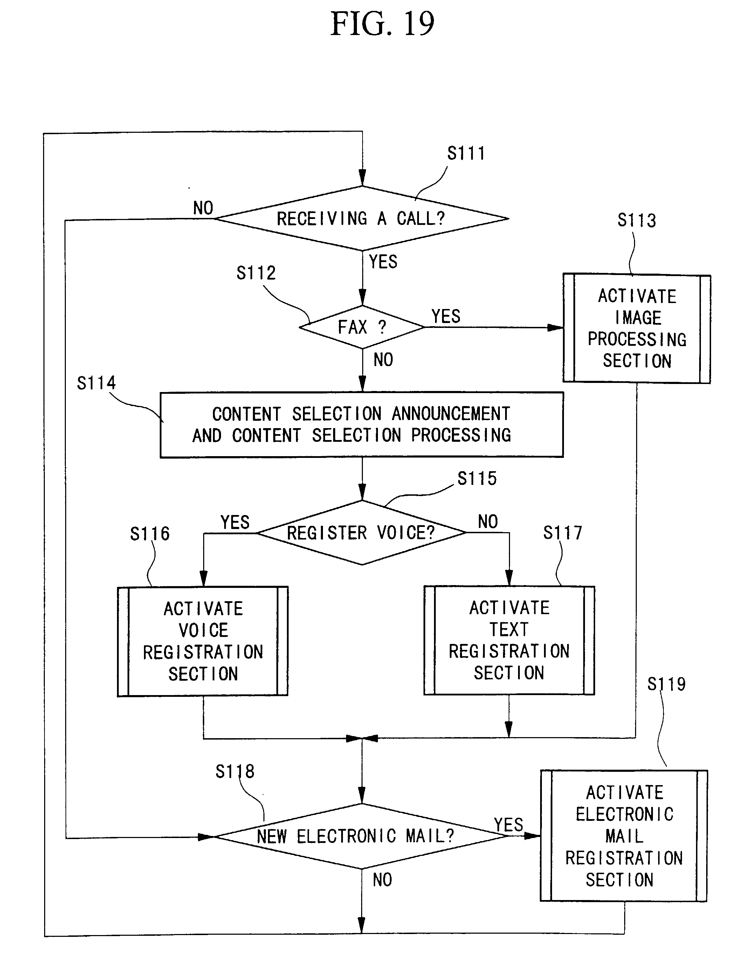

FIG. 19 is a flow chart showing the operation of the contents operation section 211. Hereunder, the operation of the contents operation section 211 is described in detail using this figure.

At first, the contents operation section 211 performs confirmation of whether or not there is a call via the public telephone line (step S111). Here the modem 30 is also provided with a function for:

- performing call detection and connection processing for when there is access of the contents registration apparatus 1 from a terminal device such as a telephone or facsimile, and notifying the processing section 10,
- in the case of facsimile communication, detecting this and notifying the processing section 10 that there is facsimile communication, and
- notifying the processing section 10 of the correspondence to the number display service, being the pre-call connection information notification service, and the telephone number on the calling side (caller's phone number) obtained by this service prior to taking the call.

The contents operation section 211 then performs confirmation as to whether or not there is a call, based on the presence of call notification from the modem 30.

Next the contents operation section 211 performs judgment as to whether or not there is facsimile transmission by utilizing the notification from the modem 30 (step S112).

In the case where it is judged that there is a facsimile transmission, the contents operation section 211 searches the table.dat (222) shown in FIG. 20 with the telephone number on the calling side which is notified from the modem 30 as a search key, and specifies the directory which stores the image content to be registered or updated. The contents operation section 211 then activates the image registration section 214 in order to perform registration or updating of the image content, and delivers the calling side telephone number and the searched directory name to the image registration section 214 (step S113). In the case where the calling side facsimile does not use the number display service, the contents operation section 211 cannot acquire the telephone number of the calling side facsimile. In this case, the contents operation section 211 delivers information indicating that the calling side telephone number is "unknown", to the image registration section 214.

On the other hand, in the case where it is judged that there is no facsimile transmission, the contents operation section 211 performs announcement processing for carrying out contents selection, and performs specification of the contents to be registered or updated (step S114). That is to say, the contents operation section 211 performs announcement processing using the file for announcing the content selection, stored in the directory 225. As one example of an announcement, the subject matter may be "Please specify the contents to be accessed using a four digit number".

A person accessing from a telephone knows beforehand the number for the contents they wish to access, and after listening to the announcement, inputs the four-digit number by pressing the number buttons on the telephone. The input number is then notified to the contents operation section 211 via the DTMF identifying section 31. The contents operation section 211 then makes this four digit number the specific information for the content to be updated, and searches the table.dat (222), to thereby specify the directory in which the content to be registered or updated is stored.

In the case where the telephone on the calling side uses a number display service, and that telephone number is registered in the table.dat (222), then the contents operation section 211 can specify the directory which stores the content to be registered or updated, using the telephone number of the calling side telephone. In this case, the contents operation section 211 does not perform the abovementioned announcement processing.

Next the contents operation section 211 judges whether the content to be registered or updated is voice or text (step S115). With this judgment, judgment can be made from the specified directory name.

In the case where it is judged that the content to be registered or updated is voice, the contents operation section 211 activates the voice registration section 212 in order to perform registration or updating of the voice content, and delivers the content selection information or the telephone number on the calling side and the searched directory name to the voice registration section 212 (step S116).

On the other hand, in the case where it is judged that the content to be registered or updated is text, the contents operation section 211 activates the text registration section 213 in order to perform registration or updating of the text content, and delivers the content selection information or the telephone number on the calling side and the searched directory name to the text registration section 213 (step S117).

After the processing of steps S113, S116 or S117 has been completed, or in the case where there is no call in step S111, the contents operation section 211 judges whether or not there is an arrival of electronic mail for the contents registration apparatus (step S118). Here if the contents registration apparatus 1 is also provided with an electronic mail server function, the contents operation section 211 performs the judgment by confirming whether or not there is new electronic mail addressed to the contents registration apparatus 1 in the mailbox. On the other hand, in the case where the contents registration apparatus 1 is not an electronic mail server, then the contents operation section 211 accesses an electronic mail server and performs the judgment by confirming whether or not there is an arrival of new electronic mail.

In the case where there is an arrival of electronic mail, the contents operation section 211 activates the electronic mail registration section 215, and delivers the newly arrived electronic mail to the electronic mail registration section 215 (step S119). The contents operation section 211 may perform the processing of steps S118, S119 by interrupting with periodic timer.

The contents operation section 211 performs monitoring as to whether or not there is content to be registered or updated, by means of the above steps S111 to S119.

[voice registration section]

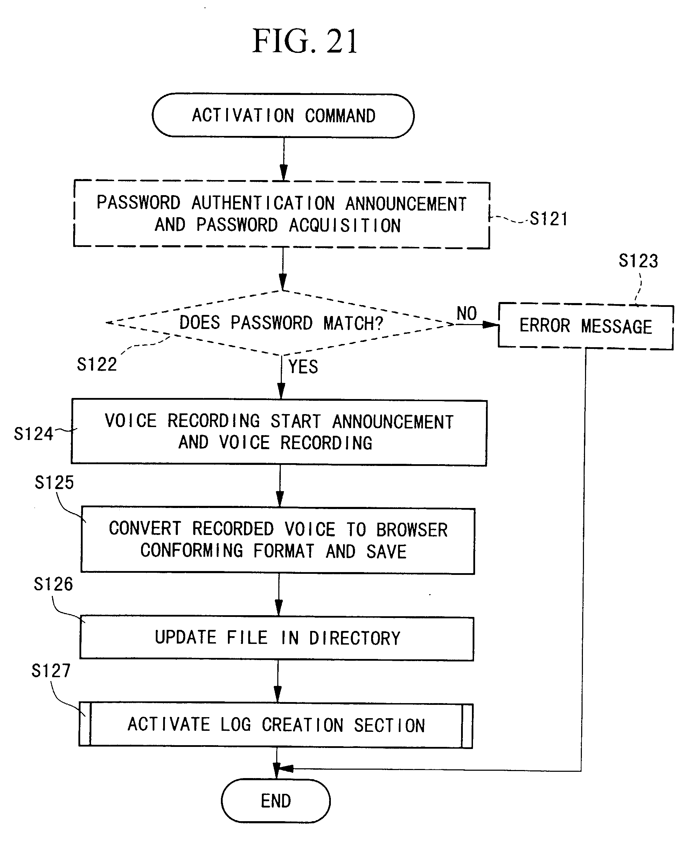

Next is a description of the operation of the voice registration section 212 with reference to FIG. 21. The voice registration section 212 starts processing based on an activation command (step S116 in FIG. 19) from the contents operation section 211.

The voice registration section 212 comprises a password authentication section for verifying if registration or updating of the content is being carried out properly, and a content registration section for performing registration or updating processing of the voice content.

At first, the password authentication section in the voice registration section 212 is activated, and password authentication processing is performed. This processing is performed as follows.

The password authentication section performs announcement processing using the file for announcing password authentication stored in the directory 225. As one example of an announcement the subject matter may be "Please input your password and then press hash (#).

The password authentication section acquires a password (A) using the information detected and identified by the DTMF identifying section 31 (step S121).

Next, the password authentication section refers to the file content.txt in the directory specified by the contents operation section 211 to thereby acquire the password (B) set for the content file. The password authentication section then makes a comparison between the password (A) and the password (B) (step 122).

In the case where the two passwords do not match, the password authentication section performs announcement processing to announce an error message (step S123), and specifies call disconnect processing to the modem 30 to terminate processing.

On the other hand, in the case where, with the password authentication section, the two passwords match, processing proceeds to the content registration section in the voice registration section 212.

The content registration section in the activated voice registration section 212 acquires via the modem 30 as content data, the voice sent from the telephone via the public telephone line (step S124).

Before acquiring the digital data, the content registration section may carry out announcement processing such as "Updating contents. Please record after the tone. Beep", using the file content.wav inside the directory specified by the contents operation section 211.

With the tone "beep" as the cue, the person making the telephone call then utters the recording content, and on completion of the utterance hangs up the telephone, thus terminating the call.

The content registration section acquires as digital data via the modem 30, the content of the utterance up until the call is cut off. Here, the content registration section stores the acquired digital data of the voice in a memory constituted by the processing section 10.

The content registration section then converts the digital data of voice into a WAV file of 8 [kHz], 8 [Bit/Sampling], PCM (Pulse Code Modulation) format, being a browser conforming format. Then by checking the file names stored in the specified directory, the file name for saving is determined, and the file is saved in the specified directory under the determined file name (step S125). For example, in the case where the maximum value of the serial number of a voice file stored as update history in the specified directory is "023", then the content registration section saves the file under the file name "wav 024.wav". At this time, the content registration section stores the determined file name in memory.

Next, the content registration section performs updating of the files in the specified directory (step S126). Updating of the files by the content registration section is performed as follows.

At first, the content registration section uses the source for the HTML file content.html in the specified directory and the file name stored in memory to create an HTML file where the voice file saved in step S126 is made the contents, and saves this. In the above example, the content registration section creates an HTML file wav024.html with wav024.wav as the content, and saves this. With the source of the HTML file created here, only the name of the target content file differs while the rest is the same. With the content registration section, when the HTML file is created, an HTML file where the registered date and time are also added into the source can be created.

Next the content registration section deletes the www.wav inside the specified directory, and copies the voice file (wav024.wav in the above example) saved in step S125 using the www.wav file name in the specified directory. With the above example, by means of the above processing there is created in the specified directory, and the voice files www.wav and wav024.wav which have the same contents, HTML files content.html and wav024.html which have the same source except linking information and the name of the target content file. In the case where there is no www.wav in the directory, then the content registration section does not execute deletion of the www.wav file.

By means of the above processing, the content which have been registered or updated in the past can be stored. Then as required, it is possible to check the update history of the contents from the contents which have been registered. Moreover, since the file name (www.wav) of the file which is the substance of the latest content and the HTML file name (content.html ) which includes the content are always the same, then the latest registered content can be easily verified.

NEXT, in order to display the log related to the registered or updated content, the log creation section 216 is activated, and the information related to the updated file (directory name and updated file name) and the information related to the person doing the updating (telephone number) is delivered to the log creation section 216 (step 127) and processing then terminated.

In the above manner, registration or update processing of the voice content is carried out using the voice registration section 212.

By incorporating the password authentication section in the voice registration section 212, unauthorized content updating can be prevented. In the case where security is not required in updating the content, the processing from step S121 to S123 in FIG. 21 can be omitted, and the content.txt in FIG. 17 can be removed.

[Text registration section]

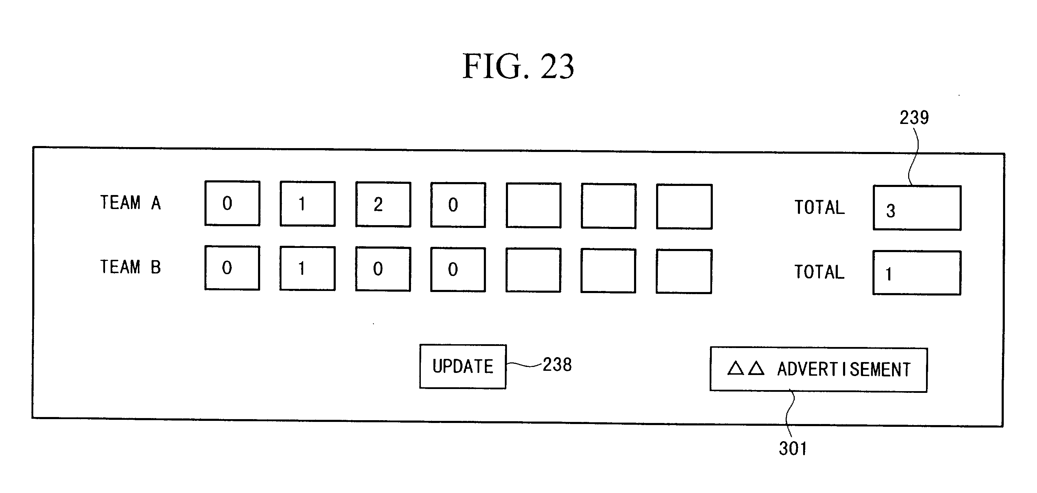

First, an example of registration or updating of text content is explained. FIG. 23 is a screen display example for the case where an HTML file (content.html: shown in FIG 17) that includes a Java Applet which uses a text file (www.txt) showing the score of a baseball game is displayed using a browser. FIG. 23 is an example of where the score of a baseball game is carried out by registration or updating of text content. In this figure, reference numeral 238 denotes an update button for displaying the score based on the latest www.txt. Moreover, the section denoted by reference numeral 239 is a display section for the score total, which the Applet automatically calculates using www.txt. The Java Applet is an application which is created by a language (Java) used on the network.

In the case where with the registration or updating of the related content in the contents registration apparatus 1 as described above, updating can be easily effected using a DTMF signal such as a number, the effect of the invention is particularly demonstrated. Moreover, by inputting code as with text, processing involving computation of code data using the Applet, is facilitated. Moreover, since the data volume for text is less than for voice or images, then high speed transmission, display, or play back is possible.

Here "Applet" means an application (Java Applet) developed in Java language. In the case when an HTML file, which has a relationship with a registered text file, has been accessed, the Java Applet is forwarded to the terminal unit performing access (computer system) and executed in this terminal unit. The function for processing www.txt is not limited to the beforementioned Java Applet. For example, in the case of processing on the contents registration apparatus 1 side, a CGI program can be used to realize this function. Moreover, in the case of processing at the forwarding address terminal, this function can be realized by plug in software for adding new functions to the browser. In the case where processing of the text file is performed at the forwarding address terminal unit, then the contents registration apparatus 1 is also provided with a function for storing the Java Applet or plug in software with a connection to the www.txt to be processed, and forwarding these to the terminal side.

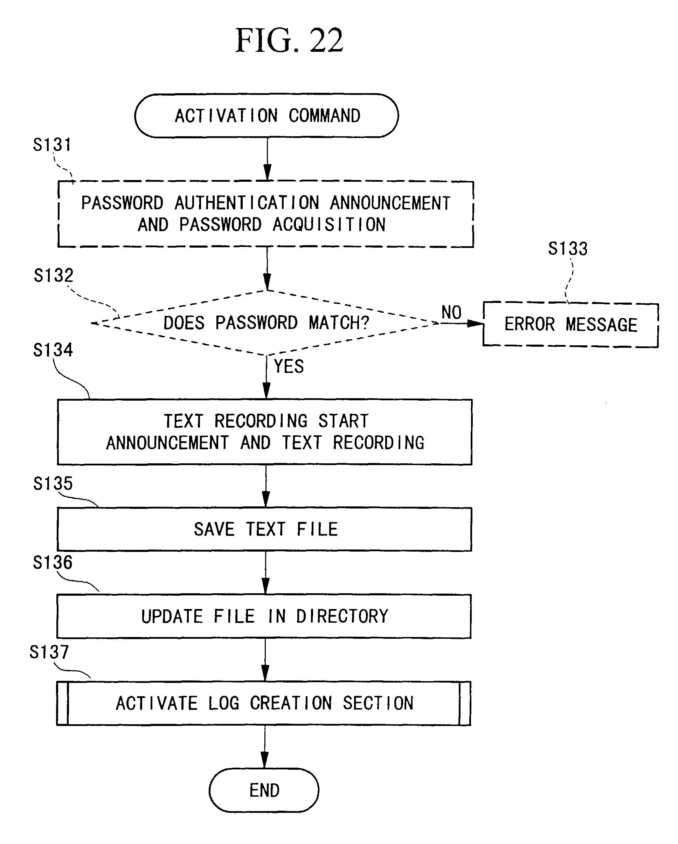

FIG. 22 is a flow chart showing the operation of the text registration section 213. The text registration section 213 starts processing based on an activation command (step S117 in FIG. 19) from the contents operation section 211.

Here the text registration section 213 comprises a password authentication section for verifying if registration or updating of the content is being carried out properly, and a content registration section for performing registration or updating processing of the text content.

At first, the password authentication section in the voice registration section 212 is activated, and password authentication processing is performed. The processing from step S131 to S133 is the same as the processing from step S121 to S123 in FIG. 21, and hence description is omitted.

In the case where the two passwords match, then the content registration section constituting the text registration section 213 acquires as text via the DTMF identifying section 31, the text sent by the telephone using the DTMF signal (step S134).

Before starting acquisition of text data, the content registration section can open the file content.wav in the directory specified by the contents operation section 211 and perform announcement processing. The announcement processing for the example of FIG. 23 is "Please input in order the score for team A and team B. After each score input press star "*". On completion of score input press hash "#".

In the example of FIG. 23, with this announcement as the cue, the caller presses the buttons on the telephone in the order
"0*0*1*1*2*0*0*0*#".

The content registration section then stores the text data acquired via the DTMF identifying section 31 in the memory constituting the processing section 10.

Then the content registration section checks the file name of the text file stored as contents update history in the directory specified by the contents operation section 211 to determine the file name for the time of saving, and as required, performs processing of the acquired text data, and saves this in the directory specified by the determined file name (step S135). The determining and saving of the file name is similar to the processing in the content registration section in the voice registration section 212.

Next, the content registration section performs updating of the files in the specified directory (step S136). Updating of the files by the content registration section is performed as follows. This processing is similar to the processing by the content registration section in the voice registration section 212, however a detailed description is as follows. At first, the content registration section uses the HTML file content.html etc. in the specified directory to create an HTML file where the text file saved in step S135 is made the content, and saves this. Next the content registration section deletes the www.txt inside the specified directory, and copies the text file saved in step S135 under the www.txt file name.

Then, in order to display the log related to the registered or updated content, the log creation section 216 is activated, and the information related to the updated file (directory name and updated file name) and the information related to the person doing the updating (telephone number) is delivered to the log creation section 216 (step 137) and processing then terminated.

In the above manner, registration or update processing of the text content is carried out using the text registration section 213.

Furthermore, with the content registration apparatus 1 of the present embodiment, text content updating can be carried out without knowledge of FTP, as long as one knows how to use a telephone (push phone).

By incorporating the password authentication section in the text registration section 213, unauthorized contents updating can be prevented. In the case where security is not required in updating the content, the processing from step S131 to S133 in FIG. 22 can be omitted, and the content.txt in FIG. 17 can be removed.

Moreover here "text content" has been described as being a text format file. However this may be in any format which can be processed by a program, and may be a binary format file.

As an application example of text input, there is:

- the score for another sport displayed similarly to that for baseball.
- the moves for a Japanese chess or Go game.

Furthermore, with the input of numbers as described above the effect of the invention is particularly demonstrated, however if a word is short, then character input of alphabet, kanji, katakana, hiragana etc. for the code input is also possible. For a character code system used at this time, a decimal code system such as a punctuated code is preferred. As an example of an application where characters other than numerals are input, there is:

- input of a subject for a homepage or
- input of a successful candidate name in an election

[Optional functions for voice registration section and text registration section]

When the voice or text is registered in the contents registration apparatus 1, there is the case where the person doing the registering wishes to verify if the registration status is satisfactory or if the registered contents are correct. Moreover there is the case where the person doing the registering wants to register or update the contents according to the verification results. To cope with such cases, the voice registration section 212 and the text registration section 213 are further provided with a judgment section, a playback section, an update section, and a cancellation section.

Here the judgment section judges the instruction from the person registering the content, sent using the DTMF signal. The playback section, in the case where the judgment result is for playback of the registered voice or text data, performs playback processing of the specified voice or text data. The update section, in the case where the judgment results are for normal registration or updating using the presently registered voice or text data, performs normal registration or updating of the content, with the presently registered voice or text data. The cancellation section, in the case where the judgment results are for cancellation of the presently registered voice or text data, deletes the presently registered voice or text data from the storage section 20.

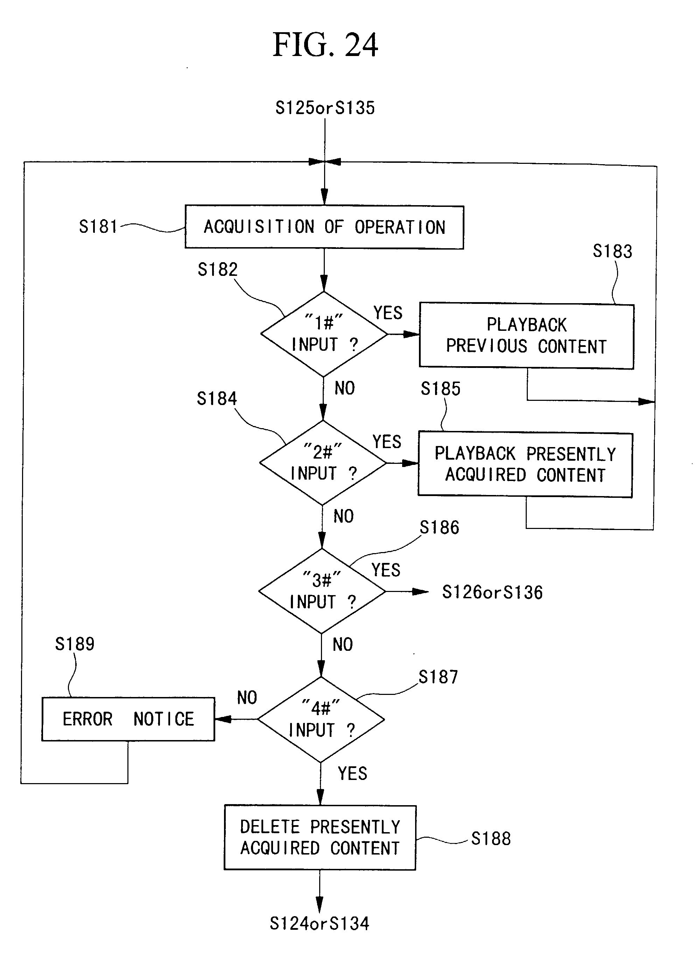

Operation of the judgment section, the playback section, the update section, and the cancellation section is described in detail using FIG. 24. This processing is carried out after completing step S125 of FIG. 21 or step S135 of FIG. 22.

At first, the judgment section performs announcement processing for inputting the instruction, using the voice file in the directory 225, and acquires the instruction (step S181). Here for the instruction there is:

1... playback of the content file which is presently registered as www.wav or www.txt.
2... playback of the content file saved in step S125 or S135.
3... normal registration or updating using the content file saved in step S125 or S135.
4... cancellation of the content file saved in steps S125 or S135 and re-registration.

As an example of the announcement in this case, there is; "Press "1" to check just registered content, "2" to check presently registered content, "3" to register or update using presently registered content, "4" to cancel the presently recorded content and re-record, then press hash "#". The judgment section acquires the instruction via the DTMF identifying section 31.

Next the judgment section judges if the value acquired via the DTMF identifying section 31 is "1#", to thereby make a judgment as to whether there is playback of the just registered content (step S182).

In the case where the acquired value is "1#", the judgment section moves the processing to the playback section. The playback section then performs playback processing of the content www.wav or www.txt in the specified directory (step S183). Here, in the case where the file is a voice file www.wav, the playback section delivers the digital data stored in this file to the modem to thereby output this as voice playback to a public telephone line. On the other hand, in the case where the file is a text file www.txt, the playback section uses a voice synthesizing section (not shown in the figure) to create the text data stored in this file as read out digital data. This digital data is then delivered to a modem so that the playback results are output to a public telephone line. By means of this processing, a person wishing to register the content can verify the subject matter of the presently recorded content.

When judged in step S182 that there is no "1#", the judgment section judges if the acquired value is "2#", to thereby make a judgment as to whether there is playback of the content saved in step S125 or S135 (step 184).

In the case where the acquired value is "2#", the judgment section moves the processing to the playback section. The playback section then performs playback processing of the voice file saved in step S125 or the text file saved in step S135 (step S185). This processing is the same as the processing in step S183. By means of this processing, a person wishing to register the content can verify the subject matter of the content tentatively registered in step S125 or step S135.

When judged in step S184 that there is no "2#", the judgment section judges if the acquired value is "3#", to thereby make a judgment as to whether there is normal registration or updating with the content saved in step S125 or S135 (step 186).

In the case where the acquired value is "3#", the judgment section moves the processing to the update section. The process of the update section is the same as the process explained at step S126 of FIG. 21 or step S136 of FIG. 22.

When judged in step S186 that there is no "3#", the judgment section judges if the acquired value is "4#", to thereby make a judgment as to whether there is cancellation of the contents saved in step S125 or S135 (step S188).

In the case where the acquired value is "4#", the judgement section moves the processing to the cancellation section. The cancellation section then deletes the file saved in step S125 or step S135 (step S188), and moves the processing to step S124 or S134 to acquire the playback content.

When judged in step S187 that there is no "4", the judgment section judges that there is an input error and performs announcement processing for error notification (step S189). Processing then moves to the judgement section in order to return to step S181.

By providing the voice registration section 212 and the text registration section 213 with the judgment section, the playback section, the update section, and the cancellation section, then a person wishing to register content in the contents registration apparatus 1 can verify the subject matter of the content tentatively registered in steps S125 or S135, or the subject matter of the content (www.wav or www.txt) presently registered. Then, according to the verification result they can normally register the tentatively registered content or correct the tentatively registered content.

By providing one or all of the judgment section, the playback section, the update section, and the cancellation section in a standard telephone (telephone unit), then in addition to the simple answering machine function in the telephone (telephone unit), a function where a person wishing to leave a message can verify the subject matter and then save this, can also be added.

Even if the contents registration apparatus 1 is not connected for example to a LAN or an Internet, if this is connected to a public telephone line, a person who has registered content such as text or voice in the contents registration apparatus 1 can verify the registered content with the abovementioned processing section, and then update or re-record the content according to the verification results.

[Image registration section]

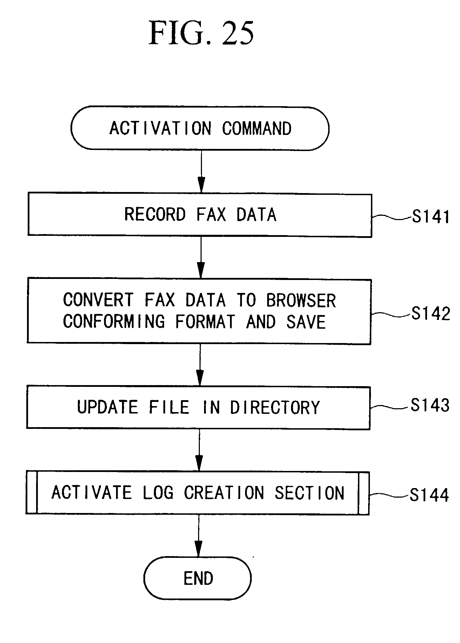

FIG. 25 is a flow chart showing the operation of the image registration section 214. Hereunder, the operation of the image registration section 214 is described in detail using this figure. The image registration section 214 starts processing based on an activation command (step S113 in FIG. 19) from the contents operation section 211.

At first, the image registration section 214, serving as the content registration section, acquires via the modem 30, the digital data for the Huffman coded image sent from the facsimile and stores this in memory (step S141).

Then the image registration section 214 checks the file name of the image file stored as content update history in the directory by the contents operation section 211 to determine the file name for the time of saving, and as required, performs decode processing of the stored digital data, and saves this in JPEG file format in the directory specified by the determined file name (step S142). The determining and saving of the file name is the same as the processing in the content registration section in the voice registration section 212.

Next, image registration section 214 performs updating of the files in the specified directory (step S143). Updating of the files by the image registration section 214 is performed as follows. This processing is similar to the processing by the content registration section in the voice registration section 212, however a detailed description is as follows. At first, the image registration section 214 uses the HTML file content.html etc. in the specified directory to create an HTML file where the image file saved in step S142 is made the content, and saves this. Next the image registration section 214 deletes the www.jpg inside the specified directory, and copies the image file saved in step S142 under the www.jpg file name.

Then, in order to display the log related to the registered or updated content, the image registration section 214 activates the log creation section 216, and the information related to the updated file (directory name and updated file name) and the information related to the person doing the updating (telephone number) is delivered to the log creation section 216 (step 144) and processing then terminated.

In the case where the calling side facsimile does not use the number display service, the contents operation section 211 delivers information indicating that the calling side telephone number is "unknown", to the image registration section 214. In this case, the image registration section 214 converts this to a file of digital data JPEG format for the acquired image in the directory denoted by reference numeral 230 in FIG. 17, and saves this as an appropriate file name having the extension "jpg". Furthermore in this case, the image registration section 214 delivers information indicating that the information related to the person doing the updating is unknown, to the log creation section 216.

In the above manner, the registration or updating of the image content is carried out in the contents registration apparatus 1.

[Optional functions for the image registration section]

There is the case where the person who registers image content in the contents registration apparatus 1 wishes to verify that the registered content is appropriate. To cope with this case, the image registration section 214 is provided with an image transmission section for transmitting a display image of the HTML file with the registered image file as content via a public telephone line to the facsimile which has registered the image content.

Here the image transmission section is activated in the case of either of the two following situations.

(1) The image content is registered by the image registration section 214 and after the line is disconnected, the image transmission section is activated by an instruction from the image registration section 214 and image transmission is performed. The image transmission section delivers the telephone number acquired by the pre-call connection information notification service from the image registration section 214, executes line connection for the facsimile of this telephone number, and forwards the image.

(2) In the case where the person wishing to check the registered image performs telephone connection to the contents registration apparatus 1 using the facsimile, and requests forwarding of the image, the image forwarding section is activated. In this case, with the contents operation section 12 the announcement in step S114 of FIG. 19 may be "Please specify the content to be accessed using a four digit number. To check the registered image, press "8#"". Furthermore, in the case where there is an image forwarding request, the contents operation section 211 activates the image forwarding section, and also delivers the telephone number acquired by the pre-call connection information notification service.

Next is a description of the operation of the activated image forwarding section.

At first, the image forwarding section searches the table.dat (222) with the delivered number as the search key, and performs specification of the directory in which the image to be forwarded is stored.

The image forwarding section then creates image data for when the content.html in the specified directory is displayed by a browser. Next the image forwarding section encodes the created image data in data format for when sending to the facsimile.

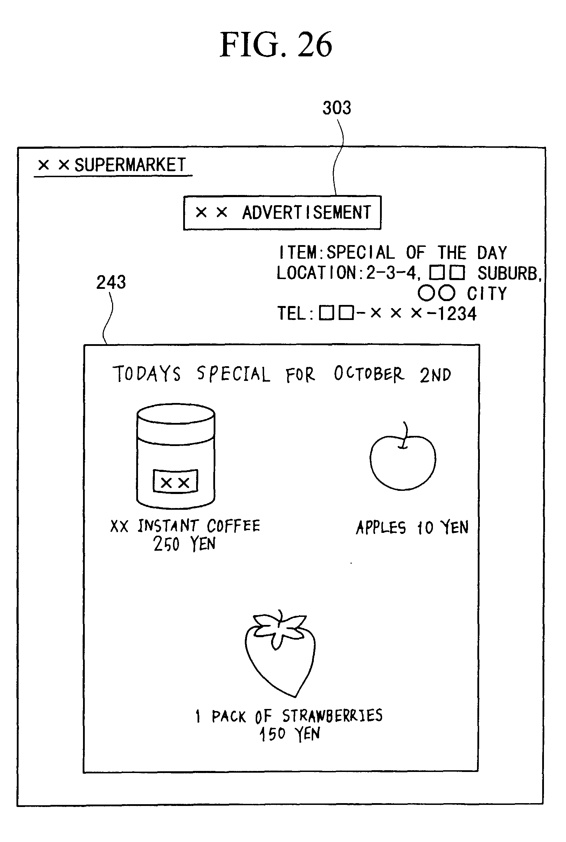

The image forwarding section then delivers the encoded data to the modem 30 to thereby transmit to the facsimile via a public telephone line, the display image of the HTML file (content.html) with the registered image file (www.jpg) linked as content. FIG. 26 is an example of a display image of content.html. The section denoted by reference numeral 243 is the image content (www.jpg) sent by a facsimile. In the case where the image transfer section is activated by instructions from the image registration section 214, the image transfer section performs line connection processing for the delivered telephone number, and then performs image forwarding.

Instead of forwarding the image of the image file (www.jpg) which includes the display image of the HTML file (content.html) to the facsimile, forwarding only the image of the image file is also available (www.jpg).

In the above manner, by forwarding the display image of HTML file with the registered image as content, then the person registering the image can not only verify the registered image but can also verify the display image on a browser.

Even if the contents registration apparatus 1 is not connected for example to a LAN or an Internet, if this is connected to a public telephone line, a person who has registered an image in the contents registration apparatus 1 can verify the registered content with the abovementioned processing section, and then re-register the content according to the verification results.

[Electronic mail registration section]

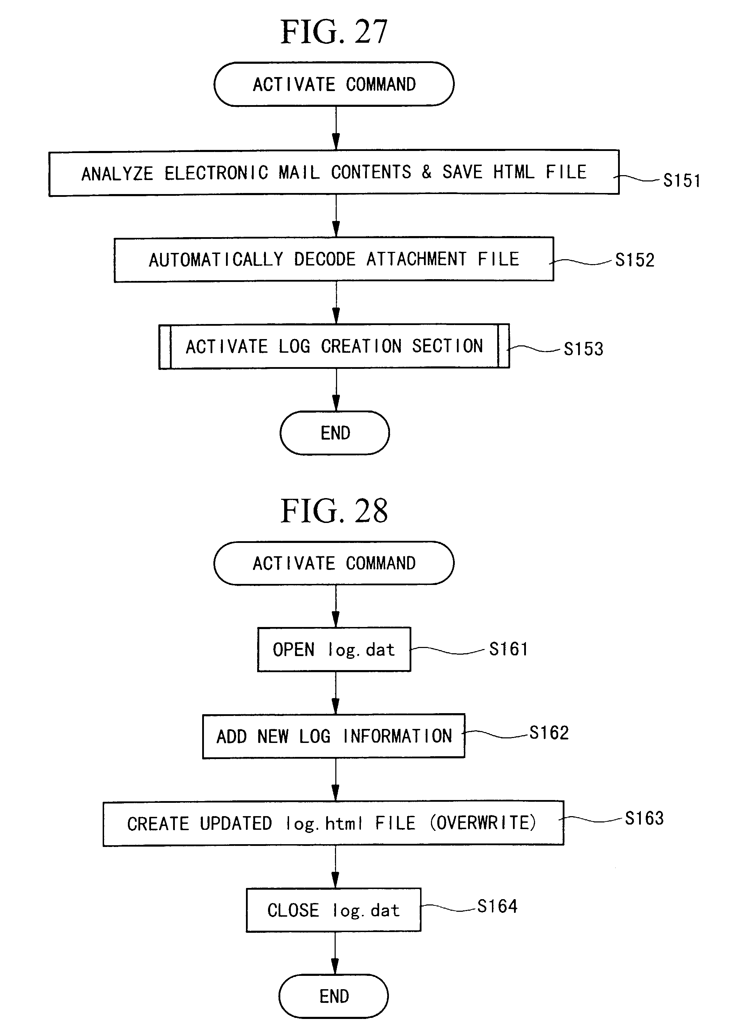

FIG. 27 is a flow chart showing the operation of the electronic mail registration section 215. Hereunder, the operation of the electronic mail registration section 215 is described in detail using this figure. The electronic mail registration section 215 starts processing based on an activation command (step S119 in FIG. 19) from the contents operation section 211.

When registration or updating of the contents is performed in the contents registration apparatus 1 using electronic mail, this is carried out based on the following arrangement;

- the mail address of the electronic mail sender is made to correspond to the directory in which is stored the contents to be registered or updated (refer to reference numeral 236 of FIG. 20);
- the subject of the electronic mail displays the file name of the HTML file to save;
- the body of the electronic mail becomes the source of the HTML file to be saved;
- in the case where there is a file of an image or voice etc. to be linked into the source of the HTML file, this is attached to the electronic mail as an attachment file.

At first, the electronic mail registration section 215, serving as the content registration section, performs an analysis of the electronic mail delivered from the contents operation section 211, and performs saving of the HTML file in a predetermined directory (step S151). More specifically, this is as follows.

The electronic mail registration section 215 performs an analysis of the electronic mail delivered from the contents operation section 211 to thereby extract the electronic mail address of the sender, the subject, and the text. The electronic mail registration section 215 then makes a search using the table.dat (refer to FIG. 20) denoted by reference numeral 222 in FIG. 17, with the electronic mail address of the sender as the search key, and specifies the directory name in which the file is saved. Then the electronic mail registration section 215 then makes the text of the electronic mail the source of the HTML file, and saves the HTML file for which the subject of the electronic mail is the file name (subject.html), in the specified directory. In the above manner step S151 is performed.

Then the electronic mail registration section 215 decodes the attachment file attached to the electronic mail and saves this in the directory specified by the electronic mail, in a file format which can be processed by a browser (step S152).

Next, in order to display the log related to the registered or updated contents, the electronic mail registration section 215 activates the log creation section 216, delivers the information related to the registered or updated file (file name and directory name) and the information related to the person doing the updating (electronic mail address of sender) to the log creation section 216 (step S153), and terminates the processing.

In the above manner, the electronic mail registration section 215 performs automatic decoding of the content file to be registered or updated attached to the electronic mail, thereby registering or updating the contents.

Furthermore, with the contents registration apparatus 1 of the present embodiment, contents updating can be carried out without knowledge of FTP, as long as one knows how to use widely popular electronic mail.

The arrangement at the time of performing contents registration or updating using electronic mail in the contents registration apparatus 1 is not limited to the above. As a second arrangement example, the following is considered:

- the directory name for the contents to be registered is described in the text of the electronic mail;
- the HTML file and the content file which this HTML file links to is attached to the electronic mail as an attachment file;
- the attachment file is one in a file format which can be processed by a browser.

Furthermore, as a third arrangement example;

- the mail address of the sender of the electronic mail is made to correspond to the directory which stores the contents to be registered or updated (refer to reference numeral 236 of FIG. 20);
- the HTML file to which the content file is linked is previously prepared in the directory, and the file which this HTML file links to is attached to the electronic mail as an attachment file.

In this case, by attaching a modem to a digital camera having a serial interface, and sending electronic mail with the image file is an attachment file, then image registration using electronic mail in the contents registration apparatus 1 can be simplified.

In the case where the attachment file is not in a file format which can be processed by a browser, the electronic mail registration section 215 converts this to a file format which can be processed by a browser, and saves this. For example in the case where the file format of the forwarded image file is Bit Map format, the electronic mail registration section 215 coverts the Bit Map format file to a file of JPEG format which can be processed by a browser. Furthermore, in the case where the file format of a forwarded voice file is AU format, the electronic mail registration section 215 converts the AU format file to a WAV format file which can be processed by a browser.

The electronic mail registration section 215 performs the registration operation for the electronic mail based on these arrangements. However no matter what arrangement this is based on, the point that the attachment file attached to the electronic mail is decoded and saved in a file format which can be processed by a browser, does not change.

When the image registration section 214 and the electronic mail registration section 215 store the image data sent from a facsimile or the image file attached to the electronic mail in a predetermined directory in the storage section 20, further processing can be performed to enlarged or reduce this to an image size corresponding to the size of the display screen (the number of pixels), that is to say an image size which can be easily seen when displayed on the screen, and this then saved as a JPEG file.

[Log creation section]

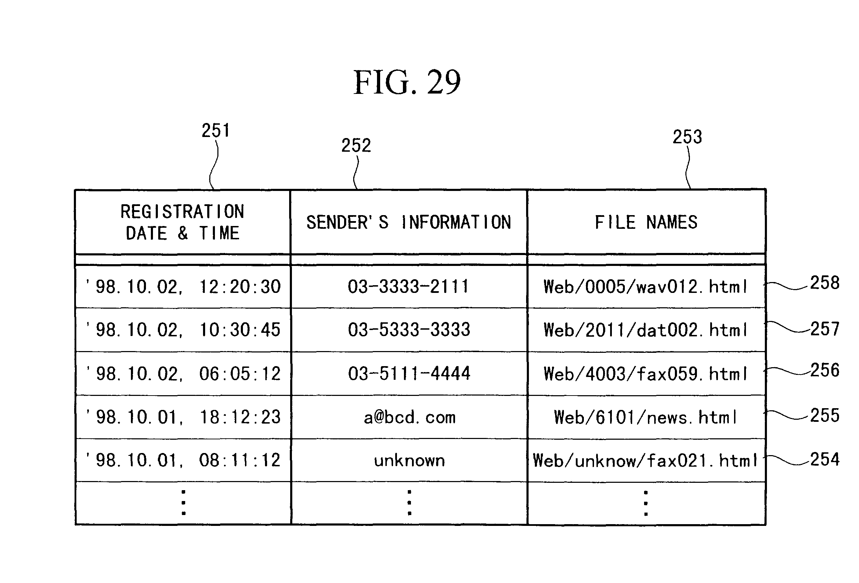

Before explaining the operation of the log creation section 216, an explanation will be given of log.dat denoted by reference numeral 223 in FIG. 17, which is used by the log creation section 216. FIG. 29 is a diagram showing an example of data structure for log.dat (223). As shown in the figure, log.dat (223) contains registration date and time 251 of the contents, senders' information 252 being information related to persons updating the content, and installation file names 253 being the information related to the updated content. Here, the senders' information 252 and the installation file names 253 are information acquired from other sections from which an activation command has been issued to the log creation section 216. Moreover, the registration date and time 251 is the date and time when the log creation section 216 was activated by other sections. In this embodiment, log.dat (223) is in descending order with respect to the date and time 251.

Referring to FIG. 29, the data denoted by reference numeral 254 is a data example of where an image is sent from a facsimile which does not utilize the number display service. In addition, the data denoted by reference numeral 255 is an example of where contents have been registered and updated by an electronic mail, and the data denoted by reference numerals 256 to 258 are examples of where contents related to either of voice, text or image have been updated by a telephone or a facsimile.

The log creation section 216 utilizes such log.dat to update log.html denoted by reference numeral 221 in FIG. 17.

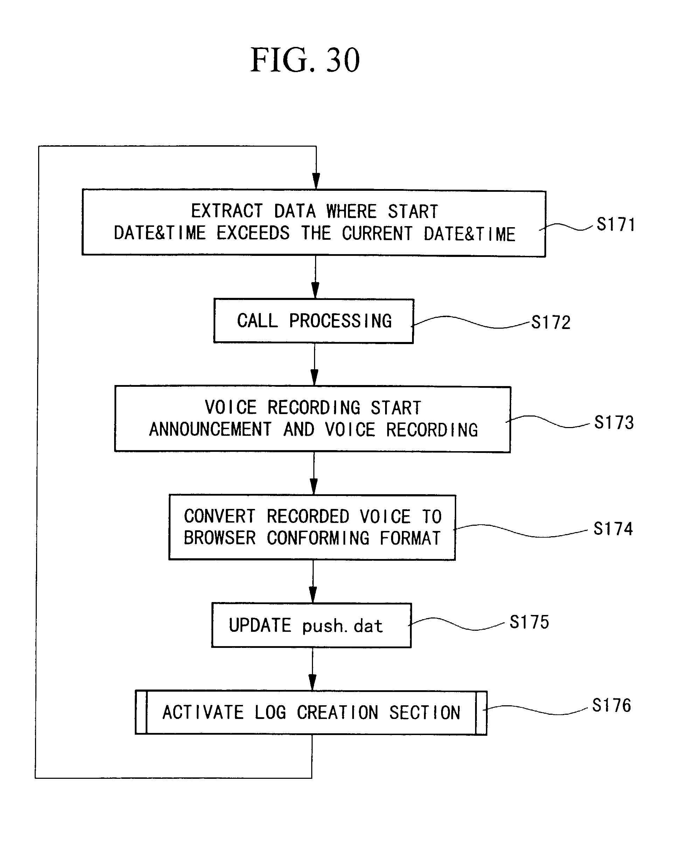

FIG. 28 is a flow chart showing the operation of the log creation section 216. The operation of the log creation section 216 will be described below in detail, with reference to this figure. The log creation section 216 starts processing by an activation command from each section which has performed content registration (either of step S127 in FIG. 21, step S137 in FIG. 22, step S144 in FIG. 25, step S153 in FIG. 27 or step S176 in FIG. 30).

The log creation section 216 first opens the file of log.dat (223) described above (step S161).

The log creation section 216 then designates the date and time when it received the activation command as the registration date and time 251, and updates the log.dat (223) by designating the information related to a person doing the updating received from other sections which have issued the activation command as the senders' information 252, and the information related to the updated content (the directory name and file name) as the installation file name 253 (step S162). For example, in FIG. 29, when data up to reference numeral 257 have been recorded, then if the contents of the data denoted by reference numeral 258 have been registered and updated, the log creation section 216 adds data denoted by reference numeral 258 in front of the data denoted by reference numeral 257 in the log.dat (223), to update the log.dat. Here, in the case of registering an image, voice or text, the installation file name including the directory name received from other sections which have issued the activation command is designated an HTML file (wav012.html, dat002.html, facsimile059.html, etc.) prepared for the updating history of the content.

The log creation section 216 then creates a log.html (221) file displayed as shown in FIG. 29 by a browser, by using log.dat (223), and stores this by overwriting (step S163). In the log.html, each part of the installation file name has a link information to the installation file.

Finally, the log creation section 216 closes the updated log.dat (223) (step S164) and terminates the processing.

In this way, by providing the log creation section 216 in the contents registration apparatus 1, HTML files having a link to the contents are automatically prepared upon registration and updating. As a result, a person accessing the contents registration apparatus 1 can easily search the registered and updated contents by perusing the log.html (221). Moreover, by designating the installation file name as the HTML file name prepared for the updating history of the contents, the updating history of each content can be easily searched by perusing the log.html (221).

The log creation section 216 may create or update log.dat or log.html with respect to the updated content file name itself (e.g. links to wav011.wav, dat022.txt, facsimile101.jpg or the like in the directories denoted by reference numerals 226, 227 and 228 in FIG. 17, hereinafter referred to as a "direct link"), rather than making the installation file name 253 an HTML file having a link to the registered or updated content file in FIG. 29 (e.g. links to wav011.html, dat022.html, facsimile101.html or the like in the directories denoted by reference numerals 226, 227 and 228 in FIG. 17, hereinafter referred to as an "indirect link"). Hence, a person accessing the contents registration apparatus 1 can directly access the registered or updated content file.

Moreover, the log creation section 216 may create log.dat and log.html related to the registration and updating of a specific directory or specific contents, rather than creating log.dat and log.html related to all registered or updated contents. Hence, a person accessing the contents registration apparatus 1 can only access the registered or updated specific contents, for example, only the voice content.

Furthermore, the log creation section 216 may create in other directories, log.dat and log.html related to only a specific directory or specific contents together with log.dat and log.html related to all the registered or updated contents. Hence, a person accessing the contents registration apparatus 1 can access all the registered or updated contents files as well as being able to easily access only registered or updated specific contents.

[Push Processing Section]

There is a demand where one wishes to always or at predetermined times make the contents registered in the contents registration apparatus 1 the latest contents . To register and update the contents, it is necessary for a person wishing to register or update the contents to access the contents registration apparatus 1. If however a person registering the contents forgets to register or update the contents for some reason or other, the contents cannot be kept the latest contents. Therefore, a push processing section 217 is provided to access registered persons from the contents registration apparatus 1, to perform registration or updating of the contents.

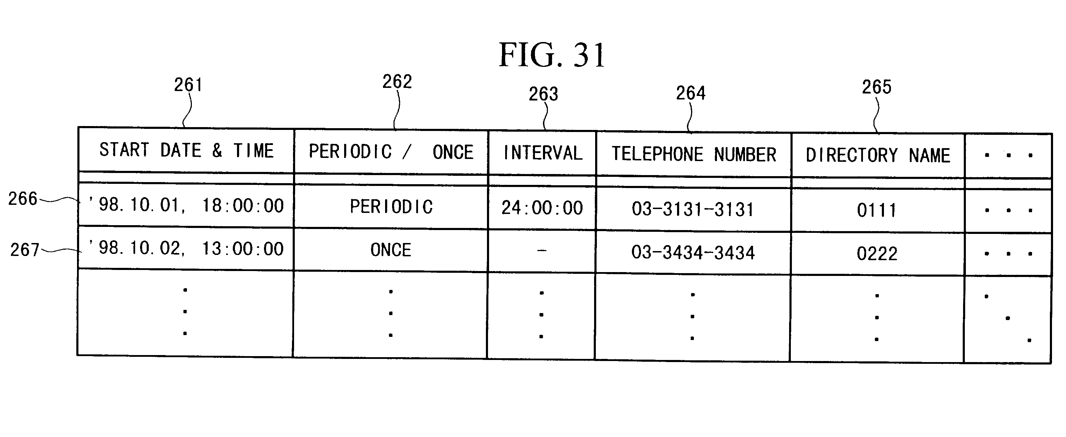

Before explaining the operation of the push processing section 217, an explanation will be given ofpush.dat denoted by reference numeral 224 in FIG. 17. FIG. 31 is a diagram showing an example of a data structure for push. dat (224). As shown in the figure, push.dat (224) contains; initiation date and time 261 for performing the push processing, data showing whether the push processing is performed periodically or once only (reference numeral 262), an interval 263 in the case of periodic push processing, the caller's telephone number 264, a directory name 265 where the contents are stored, and data showing how to process when push processing goes wrong, and the like. Here, reference numeral 266 shows a data setting example for the case of periodic push processing, with the interval 263 at 24 hours. Moreover, reference numeral 267 shows a data setting example for the case of once only push processing. The push processing section 217 performs push processing using the push.dat (224) which contains such information.

FIG. 30 is a flow chart showing the acquisition operation for voice contents by means of the push processing section 217. Hereunder, the operation of the push processing section 217 will be described in detail, with reference to FIG. 30. The push processing section 217 comprises; a call setting section for connecting a line to a telephone or a facsimile which sends voice or images, as described above, and a content registration section for acquiring the voice or images sent from a telephone or a facsimile line connected by the call setting section as digital data via the modem 30 and converting it into a content file which can be processed by a browser and storing this in a specific directory in the storage section 20.

Moreover, the push processing section 217 initiates the operation by periodic timer interruption.

At first, the call setting section in the push processing section 217 extracts data in which the initiation date and time 261 exceeds the present date and time, from the push.dat (223) (step S171). For example, when the present date and time is:

Date: ... '98.10.01; Time:... 18:00:01, the log creation section 216 extracts the data denoted by reference numeral 266 from the push.dat shown in FIG. 31.

Then, the call setting section uses the telephone number 264 (03-3131-3131) in the data extracted in the step S171 and issues an outgoing call command to the modem 30, to connect the line (step S172).

After line connection is completed, the content registration section inside the push processing section 217 performs announcement processing and voice recording using content.wav stored in the directory name 265 (directory name "0111") in the data extracted in step S171 (step S173). For example, an announcement example for the case where tomorrow's schedule for a contracted specific performing star is registered by voice is as follows: "Please record tomorrow's schedule, after the tone. Beep."

Furthermore, the content registration section converts the recorded voice into a voice file which can be processed by a browser, and updates the directory (step S174).

Incidentally, step S173 is similar to step S124 in FIG. 24, and step S174 is similar to steps S125 and S126 in FIG. 21.

Next, upon completion of the content registration and updating, the push processing section 217 performs updating processing of the data extracted in step S171 (step S175). For example, in the case of the periodic push processing, the push processing section 217 performs updating processing for updating the initiation date and time of the data to:

a new initiation date and time = (currently set initiation date and time + interval).

Hence, the periodic push processing becomes possible. In the above example, the initiation date and time 261 of the data 266 shown in FIG. 31 is updated from "'98.10.01, 18:00:00" to "'98.10.02, 18:00:00", and the updated push.dat is stored.

Moreover, in the case of once only push processing, the push processing section 217 deletes the initiation date and time of the data. Hence, once only push processing becomes possible.

Next, in order to display the log related to the registered or updated content, the push processing section 217 activates the log creation section 216, delivers the information related to the registered or updated file (file name and directory name) and the information related to the person doing the updating (telephone number) to the log creation section 216 (step S176), and terminates the processing.

The push processing section 217 repeats the above steps S171 to S176 in a predetermined interval to monitor the push processing date and time and perform the push processing.

In the case where the content registration or updating fails, such as when a telephone call cannot be made, the push processing section 217 performs processing in accordance with the data in push.dat showing the process for the case when the push processing has failed.

In this way, by providing the push processing section 217 in the contents registration apparatus 1, content updating can be performed periodically or once only. In particular, by performing periodic content updating, the contents registration apparatus 1 can contain always new content. Hence, a person perusing the contents in the contents registration apparatus 1 will always have access to the latest information.

As an example of the updating processing of voice contents by means of the push processing, there is the following:

- ask a contracted politician to periodically make a simple explanation regarding the current political situation; or
- ask sales staff to periodically report sales results.

Moreover, the push processing can be utilized not only in updating the voice content, but also in updating the image or text content. As an example of where updating of the text content is performed by the push processing, there is the case where replies to questionnaires are summed up, or the input of the score shown in FIG. 23 is urged.

In the first to sixth embodiments mentioned above, the description has been for the case where the content registration section stores voice, images and the like sent from a telephone or a facsimile as the digital data, and after completion of the transmission, converts the acquired digital data into a content file which can be processed by a browser and stores this in the storage section 20. However, the contents updating processing by means of the content registration section is not limited to this, and may involve converting into a content file which can be processed by a browser, while acquiring the voice or images sent from a telephone or a facsimile as the digital data.

Moreover, in the aforementioned several embodiments, the description has been for the case where the modem 30 is provided with the DTMF identifying section 31. However, the present invention is not limited to this. It is also possible for the modem 30 to be a so-called voice modem, and by further adding a processing section for performing detection and identification of DTMF signals from the result of a spectral analysis obtained by performing frequency conversion in the processing section 10, then software type DTMF signal detection processing can be performed in the processing section 10.

Furthermore, with the contents registration apparatus 1 shown in the above first through sixth embodiments, the contents registration apparatus 1 may incorporate a function to include a banner advertisement on the homepage related to the registered file. Here, "banner advertisement" is an advertisement on the homepage containing an image or text showing the advertising contents, and link information (URL: Uniform Resource Locator) to the homepage of an advertiser.

To include the banner advertisement, the contents registration apparatus 1 stores HTML descriptive information related to one or more banner advertisements in the storage section 20. Then after the storage section 20 has stored the acquired voice and images as a file (step S12 in FIG. 3, step S26 in FIG. 6, step S39 in FIG. 8, step S46 in FIG. 13, step S53 in FIG. 15, step S126 in FIG. 21, or step S143 in FIG. 25), the content registration section 11 (the voice registration section 212 and the image registration section 214) refers to the HTML descriptive information related to the banner advertisement stored in the storage section 20, and adds the description related to the banner advertisement to the HTML file (content.html) linked to the file (www.wav or www.jpg). An example of a display containing a banner advertisement is denoted by reference numeral 302 in FIG. 11 and reference numeral 303 in FIG. 26. For example, a person accessing the homepage shown in FIG. 11 can hear the voice content registered in the contents registration apparatus 1, while seeing the banner advertisement 302. Moreover, if interested in the contents of the banner advertisement 302, he or she can display the homepage related to the advertisement on a browser by clicking the banner advertisement 302.

Moreover, similar processing may be performed with the text registration using the DTMF signal. That is to say, the content registration section (text registration section 213), after registration of the text file (www.txt) (step S136 in FIG. 22) refers to the HTML descriptive information related to the banner advertisement stored in the storage section 20, and makes a description related to the banner advertisement in the HTML file (content.html) related to the text file. One example of a banner advertisement is denoted by reference numeral 301 in FIG. 23.

Furthermore, similar processing may be performed with the contents registration by means of electronic mail. That is to say, the content registration section (electronic mail registration section 215), after performing processing for automatic decoding or the like of the electronic mail (step S152 in FIG. 27), refers to the HTML descriptive information related to the banner advertisement stored in the storage section 20, and makes a description related to the banner advertisement in the HTML file.

As described above, the contents registration apparatus 1 incorporates the banner advertisement on the homepage related to the registered file.

With the above first through sixth embodiments, the description has been for the case where the content registration section 11 converts the acquired digital data related to voice into a WAV file, and the digital data related to images into a JPEG file or a GIF file. The file format to be converted however is not limited to this and may be a file format which can be processed by a browser, that is, a file format which can be processed by a program.

Moreover, with the above fourth, fifth and sixth embodiments, the description has been for the case where the storage section 20 does not incorporate a hierarchical structure for grouping of the contents. The contents registration apparatus 1 in the fourth, fifth and sixth embodiments can however also be applied to the case where the storage section 20 is provided with a hierarchical structure for grouping of the contents, as described in the third embodiment.

Furthermore, with the above first through fifth embodiments, the contents registration apparatus 1 may further incorporate a call setting section (push processing section) in the processing section 10, like the push processing section 217 described in the sixth embodiment, for performing line connection to a telephone or a facsimile which sends voice or images. In this case, the content registration section 11 acquires as digital data via the modem, the voice and images sent from a telephone or a facsimile line connected by the call setting section at a periodic or a set timing . Thus, the contents registration apparatus 1 prompts at a periodic or set timing, users who have their homepage in this apparatus to update the contents, so that the contents of the homepage can always be the latest. To perform line connection from the contents registration apparatus 1 side, a data file storing information related to the telephone number of a telephone or a facsimile from which updating of the contents is performed, and to timing of when the call setting section makes a telephone call for line connection is stored in the storage section 20. The call setting section then refers to the data file to perform line connection by making a telephone call via the modem 30 to the telephone or facsimile from which updating of the contents is performed. Moreover, when the contents registration apparatus 1 side makes the telephone call, the announcement issued from the contents registration apparatus 1 corresponds to the contents. With the first embodiment, taking an example of contents updating related to voice from a telephone, the contents of the announcement will be "Please update the contents. Please record after the tone. Beep."

Moreover, with the contents registration apparatus 1 in the above embodiment, application as an answering machine is also possible. That is to say, the content registration section 11 acquires the contents of a telephone call to the contents registration apparatus 1 and images sent from a facsimile, and stores all of this as a voice file or an image file which can be processed by a browser. The content registration section 11 then performs automatic modification of the HTML file related to a homepage so as to establish a link with the newly stored voice file and image file. Hence, a user of the contents registration apparatus or a user of a computer system connected to the contents registration apparatus via LAN can confirm the voice or images (facsimile images) sent to the contents registration apparatus, using a browser.

Furthermore, the contents registration apparatus 1 shown in the aforementioned first through sixth embodiments may incorporate a function to process other kinds of registered content files other than the text content, or a function to provide (transmit) a program for processing the registered content file on a terminal side from which accessing of the contents registration apparatus has been performed. Incidentally, "a function to process the contents" referred to herein is realized generally by executing a CGI program in the contents registration apparatus 1. Moreover, "a program for processing the registered content file on a terminal side from which accessing of the contents registration apparatus has been performed" used herein specifically refers to an application (Java Applet) developed in a language used on the network, for example, Java language, or plug-in software for adding a new function to a browser or the like. When the content file is processed on the terminal side from which accessing of the contents registration apparatus has been performed, the contents registration apparatus 1 stores the processing program such as a Java Applet, plug-in software or the like with a connection to the content file to be processed.

Furthermore, execution control may be performed by storing a program for realizing the function of the processing section 10 in this embodiment on a computer readable recording medium, and reading the program stored on the recording medium in a computer system to execute the program. "Computer system" referred to herein includes an operating system and hardware such as peripheral devices.

If the "computer system" is a Web server, then this also includes a program necessary for the homepage providing environment (or the display environment).

Moreover, "computer readable recording medium" refers to a portable medium such as a floppy disk, a magneto-optical disk, a ROM, a CD-ROM and the like and a storage device such as a hard disk built into the computer system. Furthermore, "computer readable recording medium" includes one which dynamically holds a program for a short period of time (transmission medium or transmission wave), for example, a communication line in the case of transmitting the program via a network such as the Internet or via a communication circuit such as a telephone line, and one which holds a program for a predetermined period of time, such as a volatile memory in the computer system which will become the server or client for that case.

The above program may be one for realizing a part of the aforementioned functions. Moreover, the program may be one which can realize the aforementioned functions in combination with a program already recorded in the computer system, a so-called difference file (difference program).

Embodiments of the present invention have been described in detail with reference to the accompanying drawings, however the specific construction is not limited to these embodiments, and may include various designs without departing from the scope of the present invention.

The contents registration apparatus and the method of the present invention can also be utilized in a form for updating the contents on a homepage by reporting from a point of sale, stock information (arrival of goods, sales, sold out) of, for example, a private concern, or for attaching on the homepage in real time from a game site as described above, the game and the progress thereof.

As described above, according to the contents registration apparatus, the method, and the computer program product containing a computer readable program, the following effects can be obtained.

The present invention acquires via a modem voice and image sent from a telephone or a facsimile via a public telephone line and converts the acquired digital data into a content file which can be processed by a browser to update the contents. Hence, a voice file or an image file which become the substance of the content on a homepage can be updated using a readily available telephone or facsimile. Moreover, a person intending to update the contents can perform contents updating, without knowledge of FTP or voice recorders, as long as he or she knows how to use a telephone or a facsimile.

Moreover, the present invention utilizes the DTMF signal sent from a telephone or a facsimile to specify the content file to be updated from amongst a plurality of content files, and updates the content file. Hence, even in the case where there are a plurality of contents, the content to be updated can be selected from amongst them and updated.

Furthermore, the present invention performs security processing by, storing a password corresponding to each content file, acquiring a password using the DTMF signal, and comparing the two passwords. Thereby, erroneous contents updating or unauthorized contents updating can be prevented.

Moreover, the present invention utilizes a telephone number on the calling side obtained by a number display service, being a pre-call connection information notification service, to specify the content file to be updated from amongst a plurality of content files, and updates the content file. Hence, the content to be updated can be selected and updated from amongst a plurality of content files without requiring a person intending to update the content to perform an operation for specifying the content to be updated.

Furthermore, when images are sent from a facsimile, the present invention specifies a content file to be updated from amongst a plurality of content files to thereby perform updating of the content file, by using one or both of a telephone number on the calling side obtained by the number display service, and facsimile identification information sent by a facsimile. Hence, the content to be updated can be selected and updated from amongst a plurality of content files without requiring a person intending to update the content to perform an operation for specifying the content to be updated.

Moreover, the present invention stores a content file in a hierarchical structure for grouping of the related contents, and utilizes the DTMF signal to specify the content file to be updated in the hierarchical structure, to perform updating of the content file. Hence, grouping of the contents is made possible, and specification and updating of the content is also possible.

Furthermore, the present invention utilizes the DTMF signal to specify a range for acquiring a voice from a telephone. Hence, a person intending to update the contents can freely set a voice record start timing and a record finish timing. As a result, the person intending to update the content can first compile the recording content (utterance content) in their head before starting talking.

The present invention further performs line connection to a telephone or a facsimile which sends voice or images, and receives the voice or images from the line connected telephone or facsimile to perform registration or updating of the content file. Hence, the contents on the homepage can always be the latest.

The present invention further acquires as text data via the modem and the DTMF identifying section, a DTMF signal sent via a public telephone line , converts the acquired text data into a content file which can be processed by a browser, and stores this in the storage section. Hence, the text file which becomes the substance of the contents on a homepage can be updated using a readily available telephone. Moreover, a person intending to update the contents can perform contents updating, without knowledge of FTP, as long as he or she knows how to use a telephone.

Furthermore, the present invention further decodes the content file attached to electronic mail, and stores the decoded file in the storage section. Hence, a voice file or an image file which become the substance of the contents on a homepage can be updated using electronic mail. Moreover, a person intending to update the contents can perform contents updating, without knowledge of FTP, as long as he or she knows how to use widely popular electronic mail.

Moreover, when the content file is stored in the storage section, the present invention updates a log file (log. html) so as to have a direct or indirect link to the content file. Hence, a person accessing the contents registration apparatus can easily access the registered or updated content file by perusing this log file.

In addition to the above processing, the present invention further acquires via said modem the voice or images sent from a telephone or a facsimile via a public telephone line as digital data, converts the acquired digital data into a content file which can be processed by a browser, and stores this in the storage section. Hence, registration processing of various content files sent via a telephone, a facsimile or electronic mail becomes possible.

Furthermore, the present invention plays back specific voice or text data, in accordance with the instructions sent using the DTMF signal sent via a public telephone line. Hence, a person who has registered voice content or text content can confirm the registered contents.

Moreover, the present invention transmits an image of a file having the registered image file as the contents to a facsimile via a public telephone line. Hence, a person who has registered the image content can confirm not only the registered image, but also the browser image display of the HTML file containing the contents.

**Claims**

1.  A contents registration apparatus comprising:

    a storage section (20) for storing a file which can be processed by a program,
    a modem (30) for connecting to a public telephone line, and
    a content registration section (11 or 212 or 213 or 214) which acquires via said modem, data that is sent from a telephone or a facsimile via a public telephone line, converts the data into a file which can be processed by a program, and stores the file in said storage section.

2.  A contents registration apparatus according to claim 1, wherein said modem is provided with a function for digitally outputting signals other than signals related to communication protocol, and
    said content registration section (11) acquires as digital data via said modem, voice or an image sent from a telephone or a facsimile via a public telephone line, and converts the digital data into a file which can be processed by a program and stores the file in said storage section.

3.  A contents registration apparatus according to claim 2, further comprising:

a DTMF identifying section (31) for detecting and identifying a DTMF signal sent from a telephone or a facsimile and outputting this as identification information, and

a contents operation section (12) which uses the identification information obtained by said DTMF identifying section, to specify a file to be updated from a plurality of files stored in said storage section, and

said content registration section (11) replaces the file specified by said contents operation section with a file which can be processed by a program and which was obtained by converting said acquired digital data.

4. A contents registration apparatus according to claim 3, wherein said storage section stores passwords corresponding to respective files, and

said contents registration apparatus further comprises,

a password authentication section (13) which acquires a password using the identification information obtained by said DTMF identifying section, and acquires from said storage section a password corresponding to the file specified by said contents operation section, and only in the case where the password acquired from said DTMF identifying section, and the password acquired from said storage section match, makes said content registration section operable.

5. A contents registration apparatus according to claim 2, wherein said modem has a number acquisition section (32) which acquires a number, being a caller's telephone number sent from a pre-call connection information notification service, and outputs this, and

said contents registration apparatus further comprises a contents operation section (12) which uses the number obtained from said number acquisition section to specify a file to be updated from a plurality of files stored in said storage section, and

said content registration section (11) replaces the file specified by said contents operation section with a file which can be processed by a program and which was obtained by converting said acquired digital data.

6. A contents registration apparatus according to claim 5, wherein said storage section stores passwords corresponding to files, and

said contents registration apparatus further comprises,

a DTMF identifying section (31) for detecting and identifying a DTMF signal sent from a telephone and outputting this as identification information, and

a password authentication section 13 which acquires a password using the identification information obtained by said DTMF identifying section, and acquires from said storage section a password corresponding to the file specified by said contents operation section, and only in the case where the password acquired from said DTMF identifying section, and the password acquired from said storage section match, makes said content registration section operable.

7. A contents registration apparatus according to claim 5, wherein said modem has a facsimile identification information acquisition section (33) which acquires facsimile identification information sent from a facsimile, and outputs this, and

said contents operation section (12), in the case where an image is sent from a facsimile, also uses the facsimile identification information obtained from said facsimile identification information acquisition section to specify a file to be updated from a plurality of files stored in said storage section.

8. A contents registration apparatus according to any one of claims 3, 4, and 6, wherein said storage section is provided with a hierarchical structure, and the files are stored inside the hierarchical structure, and

said contents operation section (12) uses the identification information identified by said DTMF identifying section to specify the file to be updated which is inside the hierarchical structure stored in said storage section.

9. A contents registration apparatus according to claim 2, further comprising:

a DTMF identifying section (31) for detecting and identifying a DTMF signal sent from a telephone or a facsimile and outputting this as identification information, and wherein,

said content registration section (11), in the case where a voice is acquired via said modem, acquires said voice via said modem over a range from obtaining a predetermined identification information from said DTMF identifying section until obtaining the next predetermined identification information.

10. A contents registration apparatus according to claim 1, wherein said contents registration apparatus further comprises;

a DTMF identifying section (31) for detecting and identifying a DTMF signal, and
said content registration section is a text registration section (213) which acquires as text data via said modem and said DTMF identifying section, DTMF signals sent via a public telephone line, and converts said acquired text data into a file which can be processed by a program and stores the file in said storage section.

11. A contents registration apparatus according to any one of claims 1 to 10, further comprising:
a call setting section for performing line connection to the telephone or facsimile sending said data, and wherein,
said content registration section (11 or 212 or 213 or 214) acquires via said modem the data sent from the telephone or facsimile connected to the circuit by said call setting section.

12. A contents registration apparatus according to claim 1, wherein said contents registration apparatus comprises a communication section (40) instead of said modem, for connecting to a network, and wherein,
said content registration section is an electronic mail registration section (215) which in the case where there is arrival of new electronic mail via the network, decodes a file attached to the electronic mail, and stores said decoded file in said storage section.

13. A contents registration apparatus according to claim 1, wherein
said content registration section (11 or 212 or 213) acquires voice or text data sent via a public telephone line, individually adds specific information to said acquired voice or text data, and stores this in said storage section, and
said contents registration apparatus further comprises:

a DTMF identifying section (31) for detecting and identifying DTMF signals,
a judgment section for judging a instruction aquired from a DTMF signal sent via a public telephone line, and
a playback section which, in the case where the judgment result by said judgment section is for playback of a specific voice or text data, plays back said specified voice or plays back said specified text data using speech synthesis, and outputs this to a public telephone line.

14. A contents registration apparatus according to claim 1, wherein
said content registration section (11 or 214) acquires as digital data via said modem, images sent from a facsimile via a public telephone line, and stores the acquired digital data as an image file in said storage section, and
said content registration section further comprises an image transmission section which transmits to a facsimile via a public telephone line the image of the file which has a linkage to the registered image file.

15. A contents registration apparatus according to any one of claims 1 to 14, wherein,
said storage section further stores a log file which has direct or indirect links to each file, and which can be processed by a program, and
said contents registration apparatus is further provided with a log creation section (216) which, in the case where a file is stored in said storage section, executes updating of said log file so as to have a direct or indirect link with said file.

16. A contents registration apparatus according to any one of claims 1 to 15, further comprising:
a processing section for processing the files stored in said storage section, or a processing section which provides a program for processing by another computer, the files stored in said storage section.

17. A contents registration apparatus according to claim 1, further comprising a means for adding a banner advertisement to a homepage related to said file.

18. A contents registration method for registering a file which can be processed by a program using a computer provided with a modem for connection to a public telephone line, said method comprising the steps of:

acquiring via said modem, data that is sent from a telephone or a facsimile via a public telephone line (step S11), and
converting the data into a file which can be processed by a program, and storing the file in a storage section of the computer (step S12).

**19.** A computer program capable of running a computer, which is provided with a storage section for storing files and a modem for connection to a public telephone line, so that the system comprising the computer program plus the computer carries out a method comprising the steps of:

acquiring via said modem, data that is sent from a telephone or a facsimile via a public telephone line, and converting said data into a file which can be processed by a program and stores the file in a storage section of the computer.

**20.** A computer program according to claim 19, wherein said modem is provided with a function for digitally outputting signals other than signals related to communication protocol, and

said system carries out the method comprising the steps of:

acquiring as digital data via said modem, voice or images sent from a telephone or a facsimile via a public telephone line (step S11), and

converting said acquired digital data into a file which can be processed by a program and stores the file in said storage section (step S12).

**21.** A computer program according to claim 19, wherein said computer further comprises a DTMF identifying section for detecting and identifying a DTMF signal, and

said system carries out the method comprising the steps of:

acquiring as text data via said modem and said DTMF identifying section, a DTMF signal sent via a public telephone line (step S134), and

converting said acquired text data into a file which can be processed by a program and stores the file in said storage section (steps S135, S136).

**22.** A computer program according to claim 19, wherein said computer comprises a communication section instead of said modem, for connecting to a network, and

said system, in the case where there is arrival of new electronic mail via a network, carries out the method comprising the steps of:

decoding the file attached to the electronic mail (steps S151, S152), and

storing said decoded file in said storage section.

**23.** A computer program according to any one of claims 19 to 22, wherein said system, in the case where a file is stored in said storage section, carries out the method further comprising a step of updating a log file which can be processed by a program, so as to have a direct or indirect link with said file (steps S161 to S164).

**24.** A computer program according to any one of claims 19 to 23, further combining with a program for processing the files stored in said storage section, or a program for processing by another computer, the files stored in said storage section.

# FIG. 1

1:CONTENTS REGISTRATION APPARATUS

10:PROCESSING SECTION

STORAGE SECTION — 20

30

CONTENT REGISTRATION SECTION

MODEM

PUBLIC TELEPHONE LINE

11

50

40

COMMUNICATION BOARD

LAN OR INTERNET (INCLUDING DIAL UP CONNECTION)

# FIG. 2

20:STORAGE SECTION

100

CONTENT DIRECTORY

content. wav
·www. wav
·content. html

# FIG. 3

RECEIVING A CALL

↓

CONTENT RECORDING ANNOUNCEMENT AND CONTENT RECORDING — S11

↓

CONVERT RECORDED CONTENT TO BROWSER CONFORMING FORMAT — S12

↓

END

# FIG. 4

1:CONTENTS REGISTRATION APPARATUS

10:PROCESSING SECTION

12

CONTENTS OPERATION SECTION

PASSWORD AUTHENTICATION SECTION — 13

CONTENT REGISTRATION SECTION

11

STORAGE SECTION — 20

MODEM — 30

DTMF IDENTIFYING SECTION — 31

PUBLIC TELEPHONE LINE

COMMUNICATION BOARD — 40

LAN OR INTERNET (INCLUDING DIAL UP CONNECTION)

50

# FIG. 5

20:STORAGE SECTION

| ANNOUNCEMENT FILE | 111 |
| --- | --- |

112   main.html —— 110   113

CONTENT A

content.wav
content.txt
www.wav
content.html

CONTENT B

.
.
.
.

# FIG. 6

```
        ┌─────────────────────┐
        │  RECEIVING A CALL    │
        └─────────────────────┘
                   │
                   ▼
   ┌─────────────────────────────────────┐
   │  CONTENT SELECTION ANNOUNCEMENT      │──── S21
   │  AND CONTENT SELECTION PROCESSING    │
   └─────────────────────────────────────┘
                   │
                   ▼
   ┌ ─ ─ ─ ─ ─ ─ ─ ─ ─ ─ ─ ─ ─ ─ ─ ─ ─ ─ ┐
   │  PASSWORD AUTHENTICATION ANNOUNCEMENT │──── S22
   │  AND PASSWORD ACQUISITION             │
   └ ─ ─ ─ ─ ─ ─ ─ ─ ─ ─ ─ ─ ─ ─ ─ ─ ─ ─ ┘
                   │                          S24
                   ▼        S23
                                          ┌ ─ ─ ─ ─ ─ ─ ─ ┐
          ◇ DOES PASSWORD MATCH? ◇──NO──→ │ ERROR MESSAGE │
                   │                      └ ─ ─ ─ ─ ─ ─ ─ ┘
                   │YES        S25                │
                   ▼                              │
   ┌─────────────────────────────────────┐       │
   │  CONTENT RECORDING ANNOUNCEMENT      │       │
   │  AND CONTENT RECORDING               │       │
   └─────────────────────────────────────┘       │
                   │          S26                 │
                   ▼                              │
   ┌─────────────────────────────────────┐       │
   │  CONVERT RECORDED CONTENT            │       │
   │  TO BROWSER CONFORMING FORMAT        │       │
   └─────────────────────────────────────┘       │
                   │                              │
                   ▼←────────────────────────────┘
        ┌─────────────────────┐
        │        END          │
        └─────────────────────┘
```

EP 0 980 177 A2

# FIG. 7

20:STORAGE SECTION

ANNOUNCEMENT FILE —121

main.html —122

124

GROUP 1

contents.wav —131
contents.html —132

133

123

CONTENT α

content.wav —141
content.txt —142
www.wav —143
content.html —144

GROUP 2

CONTENT β —134

FIG. 8

```
              ┌──────────────────────┐
              │   RECEIVING A CALL    │
              └──────────────────────┘
                         │
                         ▼
              ┌──────────────────────┐ ─── S31
              │   GROUP SELECTION     │
              │  ANNOUNCEMENT AND     │
              │   GROUP SELECTION     │
              │     PROCESSING        │
              └──────────────────────┘
                         │
                         ▼
              ┌──────────────────────┐ ─── S32
              │  CONTENT SELECTION    │
              │  ANNOUNCEMENT AND     │
              │  CONTENT SELECTION    │
              │     PROCESSING        │
              └──────────────────────┘
                         │
                         ▼
              ┌──────────────────────┐ ─── S33
              │     OPERATIONS        │
              │   ANNOUNCEMENT        │
              │  AND OPERATION        │
              │   ACQUISITION         │
              └──────────────────────┘
                         │
                         ▼
                      S34
        RETURN    ◇ OPERATION ◇   UPDATE
                         │
                    PLAYBACK
                         ▼
 S35   ┌──────────────────────┐
       │  CONTENT PLAYBACK     │
       └──────────────────────┘
```

CONTENT RECORDING START ANNOUNCEMENT AND CONTENT RECORDING — S36

ANNOUNCEMENT OF OPERATIONS OF RECORDED CONTENT AND OPERATION ACQUISITION — S37

OPERATION — S38    RETURN    NO UPDATE    UPDATE

CONVERT RECORDED CONTENT TO BROWSER CONFORMING FORMAT — S39

END ANNOUNCEMENT — S40

END

# FIG. 9

SALES GUIDE

SHINJUKU DISTRICT        GINZA DISTRICT

SHIBUYA DISTRICT        AKIHABARA DISTRICT

# FIG. 10

SHINJUKU DISTRICT

A DEPARTMENT STORE      B DEPARTMENT STORE

C DEPARTMENT STORE      D DEPARTMENT STORE

# FIG. 11

SHINJUKU DISTRICT

A DEPARTMENT STORE SALES GUIDE

XX ADVERTISEMENT

302

# FIG. 12

1:CONTENTS REGISTRATION APPARATUS

10:PROCESSING SECTION

12

CONTENTS OPERATION SECTION

PASSWORD AUTHENTICATION SECTION

CONTENT REGISTRATION SECTION

11

13

50

STORAGE SECTION 20

30

MODEM

DTMF IDENTIFYING SECTION 31

NUMBER ACQUISITION SECTION

32

PUBLIC TELEPHONE LINE

COMMUNICATION BOARD 40

LAN OR INTERNET (INCLUDING DIAL UP CONNECTION)

# FIG. 13

```
        ┌─────────────────────────┐
        │    RECEIVING A CALL      │
        └─────────────────────────┘
                     │
                     ▼
    ┌──────────────────────────────────┐
    │  CONTENT SELECTION PROCESSING     │──── S41
    │    BASED ON CALLER'S PHONE NUMBER │
    └──────────────────────────────────┘
                     │
                     ▼
    ┌ ─ ─ ─ ─ ─ ─ ─ ─ ─ ─ ─ ─ ─ ─ ─ ─ ┐
      PASSWORD AUTHENTICATION            ──── S42
      ANNOUNCEMENT AND PASSWORD
    │ ACQUISITION                      │
    └ ─ ─ ─ ─ ─ ─ ─ ─ ─ ─ ─ ─ ─ ─ ─ ─ ┘
                     │
      S43            ▼
           ◇ DOES PASSWORD MATCH? ◇ ──NO──►  ┌ ─ ─ ─ ─ ─ ─ ─ ─ ┐
                     │                          ERROR MESSAGE
                    YES                       └ ─ ─ ─ ─ ─ ─ ─ ─ ┘
                     │                              S44
                     ▼                     S45
    ┌──────────────────────────────────┐
    │  VOICE RECORDING START            │
    │  ANNOUNCEMENT AND VOICE RECORDING │
    └──────────────────────────────────┘
                     │                     S46
                     ▼
    ┌──────────────────────────────────┐
    │  CONVERT RECORDED VOICE TO        │
    │  BROWSER CONFORMING FORMAT        │
    └──────────────────────────────────┘
                     │
                     ▼
        ┌─────────────────────────┐
        │          END            │
        └─────────────────────────┘
```

# FIG. 14

1:CONTENTS REGISTRATION APPARATUS

# FIG. 15

```
         ┌──────────────────────────┐
         │     RECEIVING A CALL      │
         └──────────────────────────┘
                      │
                      ▼
    ┌────────────────────────────────────┐
    │    CONTENT SELECTION PROCESSING     │────── S51
    │  BASED ON CALLER'S PHONE NUMBER     │
    └────────────────────────────────────┘
                      │
                      ▼
    ┌────────────────────────────────────┐
    │         FAX DATA RECORDING          │────── S52
    └────────────────────────────────────┘
                      │
                      ▼
    ┌────────────────────────────────────┐
    │   CONVERT FAX DATA TO BROWSER       │────── S53
    │        CONFORMING FORMAT            │
    └────────────────────────────────────┘
                      │
                      ▼
              ┌──────────────┐
              │     END      │
              └──────────────┘
```

FIG. 16

1:CONTENTS REGISTRATION
APPARATUS

10:PROCESSING SECTION

CONTENTS OPERATION SECTION ~211

VOICE REGISTRATION SECTION ~212

TEXT REGISTRATION SECTION ~213

IMAGE REGISTRATION SECTION ~214

ELECTRONIC MAIL
REGISTRATION SECTION ~215

LOG CREATION SECTION ~216

PUSH PROCESSING SECTION ~217

20

STORAGE SECTION

30

MODEM

DTMF IDENTIFYING
SECTION

31

PUBLIC TELEPHONE LINE

COMMUNICATION BOARD

50

40

LAN OR INTERNET
(INCLUDING DIAL
UP CONNECTION)

EP 0 980 177 A2

44

# FIG. 17

EP 0 980 177 A2

20:STORAGE SECTION

221 — log. html
222 — table. dat
223 — log. dat
224 — push. dat

225 — ANNOUNCEMENT FILE

230 — unknown

226 — 0001

content. wav
content. txt
www. wav
concent. html

wav001. wav
wav001. html
wav002. wav
wav002. html
.
.
.
wav011. wav
wav011. html

0002

227 — 2001

concent. wav
content. txt
www. txt
concent. html

dat001. txt
dat001. html
dat002. txt
dat002. html
.
.
.
dat022. txt
dat022. html

2002

228 — 4001

www. jpg
content. html

fax001. jpg
fax001. html
fax002. jpg
fax002. html
.
.
.
fax101. jpg
fax101. html

4002

229 — 6001

6002

13/26

# FIG. 18

START

CONTENT CLASSIFICATION JUDGMENT — S101

"VOICE" → VOICE REGISTRATION PROCESSING — S102

"TEXT" → TEXT REGISTRATION PROCESSING — S103

"FAX" → IMAGE REGISTRATION PROCESSING — S104

"ELECTRONIC MAIL" → ELECTRONIC MAIL REGISTRATION PROCESSING — S105

LOG UPDATE PROCESSING — S106

END

EP 0 980 177 A2

# FIG. 19

S111

NO ← RECEIVING A CALL?

YES

S112

FAX ? → YES → S113 ACTIVATE IMAGE PROCESSING SECTION

NO

S114 CONTENT SELECTION ANNOUNCEMENT AND CONTENT SELECTION PROCESSING

S115

YES ← REGISTER VOICE? → NO

S116 ACTIVATE VOICE REGISTRATION SECTION

S117 ACTIVATE TEXT REGISTRATION SECTION

S118

NEW ELECTRONIC MAIL? → YES → S119 ACTIVATE ELECTRONIC MAIL REGISTRATION SECTION

NO

# FIG. 20

| | CONTENT SELECTION INFORMATION | DIRECTORY NAMES | |
|---|---|---|---|
| 233a | 0001 | 0001 | |
| 233b | 03-3331-2147 | 0001 | 233 |
| | ⋮ | ⋮ | |
| 234a | 2001 | 2001 | |
| 234b | 03-5333-2121 | 2001 | 234 |
| | ⋮ | ⋮ | |
| 235a | 03-3322-2323 | 4001 | |
| | ⋮ | ⋮ | 235 |
| 236b | abc@bcd. jp | 6001 | |
| | ⋮ | ⋮ | 236 |

# FIG. 21

ACTIVATION COMMAND

PASSWORD AUTHENTICATION ANNOUNCEMENT AND PASSWORD ACQUISITION ----S121

DOES PASSWORD MATCH? — NO → ERROR MESSAGE S123

S122

YES

S124 — VOICE RECORDING START ANNOUNCEMENT AND VOICE RECORDING

S125 — CONVERT RECORDED VOICE TO BROWSER CONFORMING FORMAT AND SAVE

S126 — UPDATE FILE IN DIRECTORY

S127 — ACTIVATE LOG CREATION SECTION

END

# FIG. 22

```
        ( ACTIVATION COMMAND )
                  |
                  v
S131
   ┌ ─ ─ ─ ─ ─ ─ ─ ─ ─ ─ ─ ─ ─ ─ ─ ┐
   | PASSWORD AUTHENTICATION ANNOUNCEMENT |
   |     AND PASSWORD ACQUISITION     |
   └ ─ ─ ─ ─ ─ ─ ─ ─ ─ ─ ─ ─ ─ ─ ─ ┘
                  |
                  v                              S133
S132                                      ┌ ─ ─ ─ ─ ─ ─ ─ ┐
    < DOES PASSWORD MATCH? > ---NO---> | ERROR MESSAGE |
                  |                       └ ─ ─ ─ ─ ─ ─ ─ ┘
                  | YES
S134              v
   ┌─────────────────────────────────┐
   |       TEXT RECORDING START       |
   | ANNOUNCEMENT AND TEXT RECORDING  |
   └─────────────────────────────────┘
                  |
S135              v
   ┌─────────────────────────────────┐
   |          SAVE TEXT FILE          |
   └─────────────────────────────────┘
S136              |
                  v
   ┌─────────────────────────────────┐
   |      UPDATE FILE IN DIRECTORY    |
   └─────────────────────────────────┘
S137              |
                  v
   ┌│───────────────────────────────│┐
   |│   ACTIVATE LOG CREATION SECTION │|
   └│───────────────────────────────│┘
                  |
                  v
              (   END   )
```

# FIG. 23

| | | | | | | | | | | |
|---|---|---|---|---|---|---|---|---|---|---|
| TEAM A | 0 | 1 | 2 | 0 | | | | TOTAL | 3 | |
| TEAM B | 0 | 1 | 0 | 0 | | | | TOTAL | 1 | |

239

UPDATE — 238

△△ ADVERTISEMENT

301

EP 0 980 177 A2

# FIG. 24

S125orS135

S181 — ACQUISITION OF OPERATION

S182

"1#" INPUT ? —YES→ PLAYBACK PREVIOUS CONTENT S183

NO

S184

"2#" INPUT ? —YES→ PLAYBACK PRESENTLY ACQUIRED CONTENT S185

NO

S186

"3#" INPUT ? —YES→ S126orS136

NO

S189

ERROR NOTICE ←NO— "4#" INPUT ? S187

YES

DELETE PRESENTLY ACQUIRED CONTENT — S188

S124orS134

# FIG. 25

```
        ┌─────────────────────────────┐
        │     ACTIVATION  COMMAND     │
        └─────────────────────────────┘
                       │
                       ▼
   ┌───────────────────────────────────┐
   │         RECORD  FAX  DATA          │ ～S141
   └───────────────────────────────────┘
                       │
                       ▼
   ┌───────────────────────────────────┐
   │   CONVERT  FAX  DATA  TO  BROWSER  │ ～S142
   │   CONFORMING  FORMAT  AND  SAVE    │
   └───────────────────────────────────┘
                       │
                       ▼
   ┌───────────────────────────────────┐
   │      UPDATE  FILE  IN  DIRECTORY   │ ～S143
   └───────────────────────────────────┘
                       │
                       ▼
   ┌───────────────────────────────────┐
   ║    ACTIVATE  LOG  CREATION  SECTION ║ ～S144
   └───────────────────────────────────┘
                       │
                       ▼
        ┌─────────────────────────────┐
        │             END             │
        └─────────────────────────────┘
```

# FIG. 26

303

× × SUPERMARKET

× × ADVERTISEMENT

ITEM:SPECIAL OF THE DAY
LOCATION:2-3-4, □□ SUBURB,
○○ CITY
TEL:□□-× × ×-1234

243

TODAYS SPECIAL FOR OCTOBER 2ND

XX INSTANT COFFEE
250 YEN

APPLES 10 YEN

1 PACK OF STRAWBERRIES
150 YEN

## FIG. 27

```
        ACTIVATE COMMAND
               │
               ▼
┌──────────────────────────────────────────────┐
│ ANALYZE ELECTRONIC MAIL CONTENTS & SAVE HTML FILE │──── S151
└──────────────────────────────────────────────┘
               │
               ▼
┌──────────────────────────────────┐
│ AUTOMATICALLY DECODE ATTACHMENT FILE │──── S152
└──────────────────────────────────┘
               │
               ▼
│┌───────────────────────────────┐│
││ ACTIVATE LOG CREATION SECTION ││──── S153
│└───────────────────────────────┘│
               │
               ▼
              END
```

## FIG. 28

```
        ACTIVATE COMMAND
               │
               ▼
        ┌──────────────┐
        │ OPEN log.dat │──── S161
        └──────────────┘
               │
               ▼
     ┌────────────────────────┐
     │ ADD NEW LOG INFORMATION │──── S162
     └────────────────────────┘
               │
               ▼
┌──────────────────────────────────────┐
│ CREATE UPDATED log.html FILE (OVERWRITE) │──── S163
└──────────────────────────────────────┘
               │
               ▼
        ┌───────────────┐
        │ CLOSE log.dat │──── S164
        └───────────────┘
               │
               ▼
              END
```

# FIG. 29

| REGISTRATION DATE & TIME | SENDER'S INFORMATION | FILE NAMES | |
|---|---|---|---|
| '98.10.02, 12:20:30 | 03-3333-2111 | Web/0005/wav012.html | 258 |
| '98.10.02, 10:30:45 | 03-5333-3333 | Web/2011/dat002.html | 257 |
| '98.10.02, 06:05:12 | 03-5111-4444 | Web/4003/fax059.html | 256 |
| '98.10.01, 18:12:23 | a@bcd.com | Web/6101/news.html | 255 |
| '98.10.01, 08:11:12 | unknown | Web/unknow/fax021.html | 254 |
| ⋮ | ⋮ | ⋮ | |

251   252   253

EP 0 980 177 A2

# FIG. 30

EXTRACT DATA WHERE START
DATE&TIME EXCEEDS THE CURRENT DATE&TIME — S171

CALL PROCESSING — S172

VOICE RECORDING START
ANNOUNCEMENT AND VOICE RECORDING — S173

CONVERT RECORDED VOICE TO
BROWSER CONFORMING FORMAT — S174

UPDATE push.dat — S175

ACTIVATE LOG CREATION SECTION — S176

# FIG. 31

| START DATE & TIME | PERIODIC / ONCE | INTERVAL | TELEPHONE NUMBER | DIRECTORY NAME | · · · |
|---|---|---|---|---|---|
| '98. 10. 01, 18:00:00 | PERIODIC | 24:00:00 | 03-3131-3131 | 0111 | · · · |
| '98. 10. 02, 13:00:00 | ONCE | – | 03-3434-3434 | 0222 | · · · |
| ⋮ | ⋮ | ⋮ | ⋮ | ⋮ | · · · |

261 — START DATE & TIME
262 — PERIODIC / ONCE
263 — INTERVAL
264 — TELEPHONE NUMBER
265 — DIRECTORY NAME
266 — '98. 10. 01, 18:00:00
267 — '98. 10. 02, 13:00:00

EP 0 980 177 A2